(19) Europäisches Patentamt
European Patent Office
Office européen des brevets

(11) Veröffentlichungsnummer: **0 147 783**
**A2**

# (12) EUROPÄISCHE PATENTANMELDUNG

(21) Anmeldenummer: **84115792.8**

(22) Anmeldetag: **19.12.84**

(51) Int. Cl.⁴: **C 09 B 67/22**
C 09 B 29/085, D 06 P 1/18
//D06P3/36, D06P3/26

(30) Priorität: **30.12.83 DE 3347572**

(43) Veröffentlichungstag der Anmeldung:
**10.07.85 Patentblatt 85/28**

(84) Benannte Vertragsstaaten:
**CH DE FR GB IT LI**

(71) Anmelder: **HOECHST AKTIENGESELLSCHAFT**
**Postfach 80 03 20**
**D-6230 Frankfurt am Main 80(DE)**

(72) Erfinder: **Hähnke, Manfred, Dr.**
**Behringstrasse 13**
**D-6233 Kelkheim (Taunus)(DE)**

(72) Erfinder: **Kühn, Reinhard**
**Heinrich-Bleicher-Strasse 39**
**D-6000 Frankfurt am Main 50(DE)**

(72) Erfinder: **Hähnle, Reinhard, Dr.**
**Kastanienweg 7a**
**D-6240 Königstein/Taunus(DE)**

(72) Erfinder: **Schickfluss, Rudolf, Dr.**
**Luisenstrasse 37**
**D-6233 Kelkheim (Taunus)(DE)**

## (54) Mischungen blauer Dispersions-Azofarbstoffe für das Färben von synthetischen Fasern.

(57) Disperse Blue 56 ist ein wichtiger Blau-Farbstoff für das Färben von PES-Fasern im Kochtemperatur- oder Hochtemperatur-Verfahren. Diese anthrachinoide Verbindung Disperse Blue 56 weist neben seinen Vorteilen (hohe Lichtechtheit, pH/Reduktions-Unempfindlichkeit, Reinheit des Farbtons) einige technische Nachteile (schlechtes Egalfärbevermögen, starke Begleitfaseranschmutzung, rote Abendfarbe) auf.

Durch eine Kombination mehrerer blauer Dispersions-Azofarbstoffe mit ausgewählten konstitutionellen Merkmalen in Form von Mischungen oder Mischkristallen gelingt es, die Vorteile von Disperse Blue 56 nachzustellen, gleichzeitig jedoch seine Nachteile weitgehend zu vermeiden. Diese Azofarbstoffe sind auf der Basis von Kupplungsprodukten aus diazotierten, 2,6-substituierten 4-Nitroanilinen mit substituierten N,N-Dialkylanilinen aufgebaut.



Croydon Printing Company Ltd

HOECHST AKTIENGESELLSCHAFT HOE 83/F 287 Dr.CZ/ml

Mischungen blauer Dispersions-Azofarbstoffe für das Färben von synthetischen Fasern

Synthetische Fasern wie Polyester(PES)-, Polyamid- oder Acetatfasern können mit Dispersionsfarbstoffen im Auszieh-Verfahren bekanntlich nach der Hochtemperatur-Methode (zwischen 105 und 140°C, vorzugsweise bei 130°C) oder nach der Kochtemperatur-Methode (bei 95 bis 100°C unter Zusatz von Carriern) gefärbt werden.

Für die Kochtemperatur-Färbung, welche gewöhnlich auf offenen Färbeapparaten unter atmosphärischem Druck durchgeführt wird, sind jedoch nur wenige ausgewählte Dispersionsfarbstoffe für die Erzeugung aller Farbtiefen geeignet. Viele Dispersionsfarbstoffe führen trotz Einsatzes eines Carriers nur zu geringen bis mittleren Farbtiefen nach dieser Methode.

Innerhalb des Blau-Bereichs beim Färben von PES-Fasern unter Kochtemperatur-Bedingungen hat sich in der Praxis das anthrachinoide C.I. Disperse Blue 56 (C.I.-Nr. 63285) weltweit als wichtigster Blaufarbstoff für Typ- und Kombinationsfärbungen durchgesetzt. Es ist auch schon vorgeschlagen worden, diesen Anthrachinon-Farbstoff mit Dispersions-Blaufarbstoffen von anderer chemischer Konstitution (die eventuell preisgünstiger, farbstärker sind) so zu mischen, daß die färberische Eignung für die Kochtemperatur-Färberei von PES-Fasern ausreichend erhalten bleibt.

Disperse Blue 56 führt zu klaren, rotstichig blauen Färbungen mit hoher Lichtechtheit; und obgleich dieser Farbstoff als Standard-Produkt sowohl bei der Koch- als auch bei der Hochtemperatur-Färberei von PES-Fasern prinzipiell für alle Farbtiefen geeignet ist, so weist derselbe dennoch eine Reihe von Nachteilen auf:

In dieser Hinsicht ist zunächst einmal die Farbstärke, wie dies für anthrachinoide Blaufarbstoffe typisch ist, als relativ gering zu bewerten. Als Folge davon führt dieser Umstand zu hohem Farbstoffbedarf und somit zu erheblichen Kosten, besonders für die Erzeugung von Färbungen mit höheren Farbtiefen.

Fernerhin liegt das Verteilungsgleichgewicht am Ende des Färbevorgangs (d.h. die Farbstoffmenge in der Faser im Vergleich zur Farbstoffmenge in der Färbeflotte) derart ungünstig, so daß - je nach gefärbter Farbtiefe - eine beträchtliche Farbstoffmenge nicht mehr auf die PES-Faser aufzieht.

Darüber hinaus werden bei der Färbung von Mischungen aus PES-Fasern und Fasern natürlicher Herkunft wie Wolle, Baumwolle oder mit Regeneratcellulose die erwähnten Begleitfasern stark angeschmutzt. Diese Anschmutzung der Begleitfasern läßt sich auch durch eine reduktive Nachreinigung nicht restlos entfernen.

Bei Anwesenheit von einigen Metallionen (wie Verursachern der Wasserhärte, von Kupfer, Eisen etc.) im Färbebad besteht wiederum die Gefahr von Farbstoffausfällungen, so daß oft unter Zusatz Komplexbildnern gefärbt werden muß.

Beim Färben von Wickelkörpern (X-Spul-, Muff-, Baum-Färberei) sowie bei der Stranggarn- und bei der Stückfärbung besteht - besonders bei schwierigen maschinellen und materiellen Voraussetzungen und bei den modernen Schellfärbeverfahren - im Typ und in der Kombination stets die große Gefahr eines unegalen Ausfalls der Färbung. Disperse Blue 56 gehört, falls man nicht eine überlange Färbedauer für das nachträgliche Ausegalisieren der Färbung zur Anwendung bringt, zu den besonders schlecht egalisierenden Dispersions-Blaufarbstoffen.

Bei der Betrachtung von PES-Färbungen mit Disperse Blue 56 unter Glühlampen- und Leuchtstoffröhrenlicht zeigt sich schließlich im Vergleich zu einer solchen Beleuchtung mit natürlichem oder künstlichem Tageslicht ein starker Farbtonumschlag (Abendfarbe) nach der Seite des roten Spektralbereichs. Diese ausgeprägte Abendfarbe in Abhängigkeit von der verwendeten Lichtquelle ist im Laufe der vergangenen Jahrzehnte mangels besserer Alternativen von der Praxis akzeptiert worden. Wenn allerdings in einer bestehenden Färberezeptur Disperse Blue 56 durch einen anderen Blaufarbstoff ersetzt werden soll, dann ist es aus dem zuvor dargelegten Grunde praktisch nicht möglich, die gesuchte Nuance metameriefrei nachzustellen.

In Anbetracht der zuvor diskutierten Beanstandungen aus der Praxis bestand für die vorliegende Erfindung daher die Aufgabe, die geschilderten Unzulänglichkeiten des anthrachinoiden Disperse Blue 56 beim Einsatz zum Ausziehfärben von Synthesefasern, insbesondere von PES-Fasern und deren Mischungen mit anderen Fasern, durch die Entwicklung von dafür brauchbaren neuen Kombinationen aus an sich bekannten blauen Farbstoffen zu beseitigen und gleichzeitig eine günstige Kosten/Fabstärke-Relation für die Ersatzlösung anzustreben.

Nun werden vom Stand der Technik wohl schon blaue Azoverbindungen der nachstehenden Formel beschrieben wie auch ihre Anwendung als Einzelfarbstoffe für die Färbung von PES-Fasern (vgl. Deutsche Auslegeschriften DE-B-1 290 915 und DE-B-1 544 563):

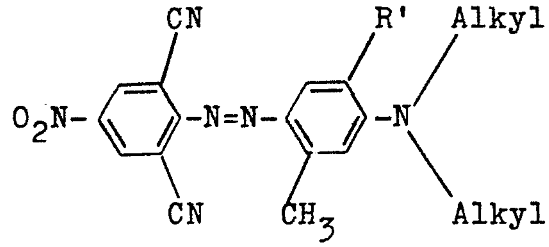

R' = H oder Alkoxy

Dispersionsfarbstoffe dieses Typs zeichnen sich hierbei durch eine ziemliche Klarheit des Farbtons sowie durch eine beachtliche Farbstärke aus. Andererseits erhält man im Fall von R' = H wiederum Blau-Färbungen, deren Aussehen unter Glühlampenlicht außerordentlich kräftig noch röter umschlägt, und im Falle von R' = Alkoxy Färbungen, welche bei Betrachtung unter Glühlampenlicht auffallend stark grüner erscheinen. Außerdem führen beispielsweise die Farbstoffe der vorgenannten Formel mit Alkyl = Ethyl und mit R = H bzw. Methoxy bei der Kochtemperaturfärbung von PES-Fasern selbst unter Mitverwendung von Carriern allenfalls nur zu mittleren bzw. geringen Farbtiefen. Erhöhte Farbstoff-Einsatzmengen als bislang üblich erbringen in diesem Fall jedoch keine weitere Farbvertiefung, sondern verbleiben unbeansprucht im Färbebad zurück.

Fernerhin ist es ebenso bekannt, blaue Dispersions-Azofarbstoffe der folgenden Formel

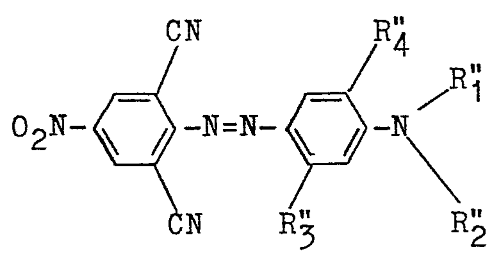

$R_1'' = C_1-C_4$-Alkyl
$R_2''$ = H oder $R_1''$
$R_3'' = CH_3$, $OCH_3$ oder $OC_2H_5$
$R_4''$ = H oder $R_3''$

für das Thermotransfer-Druckverfahren einzusetzen (vgl. Deutsche Offenlegungsschrift DE-A-31 21 981). Eine solche Anwendung im Transferdruck steht allerdings in keinerlei Beziehung zur Benutzung dieser Produkte für den Ausziehfärbe-Prozeß.

Es wurde nun gefunden, daß man die zuvor erwähnten Nachteile der bekannten blauen Einzelfarbstoffe beim Ausziehfärben von insbesondere PES-Fasern durch gezielten Einsatz einer Kombination ausgewählter Azoverbindungen vom obengenannten Typ vermeiden kann. Aufgrund von experimentellen Untersuchungen hat sich nämlich überraschenderweise herausgestellt, daß Mischungen von zwei oder drei Einzelfarbstoffen nur beim Vorliegen bestimmter konstitutioneller Merkmale sich im Ziehverhalten synergistisch verhalten, während Mischungen anderer Farbstoffe kein besseres Ziehverhalten als die entsprechenden Einzelfarbstoffe aufweisen.

Gegenstand der vorliegenden Erfindung sind somit in erster Linie Farbstoffpräparationen in Form von Mischungen oder Mischkristallen, gekennzeichnet durch (a) einen Gehalt an 20 bis 90, vorzugsweise 30 bis 80, insbesondere 50 bis 70 Gewichtsteilen eines oder mehrerer blauer Dispersionsfarbstoffe der allgemeinen Formel I

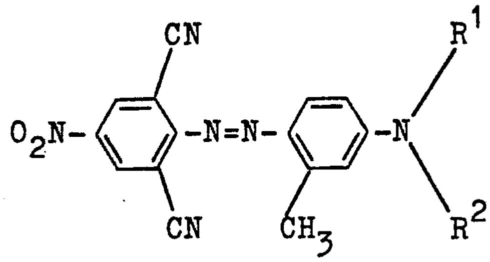

(I),

und 10 bis 80, vorzugsweise 20 bis 70, insbesondere 30 bis 50 Gewichtsteilen eines oder mehrerer blauer Dispersionsfarbstoffe der allgemeinen Formel II

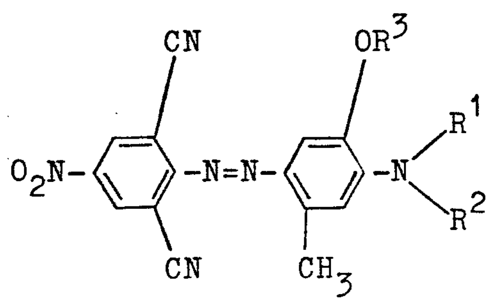

(II),

und 0 bis 70, vorzugsweise 0 bis 50, insbesondere 0 bis 20 Gewichtsteilen eines oder mehrerer blauer Dispersionsfarbstoffe der allgemeinen Formel III

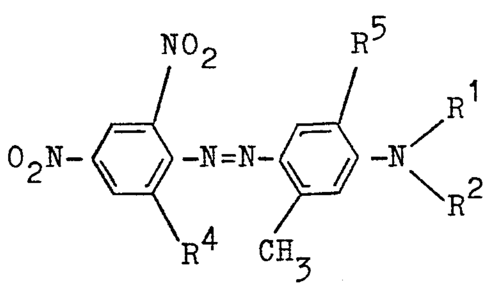

(III),

und 0 bis 30, vorzugsweise 0 bis 20, insbesondere 10 bis 20 Gewichtsteilen eines oder mehrerer blauer Dispersionsfarbstoffe der allgemeinen Formel IV

 

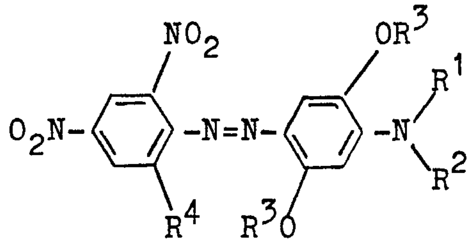

(IV),

oder (b) einen Gehalt an 20 bis 90, vorzugsweise 30 bis 80 Gewichtsteilen eines oder mehrerer blauer Dispersionsfarbstoffe der allgemeinen Formel I oder 10 bis 80, vorzugsweise 20 bis 70 Gewichtsteilen eines oder mehrerer blauer Dispersionsfarbstoffe der allgemeinen Formel II und 10 bis 90, vorzugsweise 20 bis 80 Gewichtsteilen eines oder mehrerer blauer Dispersionsfarbstoffe der allgemeinen Formel III und 0 bis 30, vorzugsweise 0 bis 20 Gewichtsteilen eines oder mehrerer blauer Dispersionsfarbstoffe der allgemeinen Formel IV,

wobei in den Formeln I bis IV

$R^1$ und $R^2$ = geradkettiges oder verzweigtes $(C_1-C_4)$-Alkyl oder $(C_1-C_4)$-Alkenyl, vorzugsweise Methyl oder Ethyl, die jeweils gleich oder verschieden sein können,
$R^3$ = Methyl oder Ethyl, gegebenenfalls in der Kohlenstoffkette durch Ethersauerstoff unterbrochen,
$R^4$ = Chlor oder Brom und
$R^5$ = Wasserstoff oder den Rest $OR^3$

bedeuten und worin die anteiligen Mengen an den zugrundeliegenden Einzelfarbstoffen jeweils auf ein Gesamtgewicht der Präparation von 100 Gewichtsteilen an den Farbstoffen der Formeln I bis IV berechnet und (im Falle

von Handelsprodukten) auf den Gehalt an Reinfarbstoff bezogen sind.

Farbstoffpräparationen mit den erfindungsgemäßen Merkmalen, die als Mischung oder als Mischkristall in Form einer z.B. durch Vermahlung mittels Dispergiermittel(n) resultierenden Feinverteilung (in färbefertigem Zustand) vorliegen, sind hervorragend geeignet für das Ausziehfärben von Synthesefasern (z.B. zusammengesetzt aus Polyamid- oder Acetatfasern, insbesondere aber Polyesterfasern) für sich allein oder als Bestandteil von solche synthetischen Fasern aufweisenden Mischungen mit Naturfasern (wie Wolle, Baumwolle) oder Regeneratfasern vornehmlich Regeneratcellulose) bei Kochtemperatur (95°C-100°C) des wäßrigen Färbemediums oder unter Hochtemperatur-Bedingungen (105°C-140°C), in Gegenwart oder Abwesenheit eines praxisüblichen Carriers. Sie werden nach der vorliegenden Erfindung eingesetzt als Dispersions-Blaufarbstoff zur Erzielung von vor allem blauen Typfarbtönen auf den Synthesefasern bzw. der Synthesefaserkomponente von Fasermischungen, oder auch von Kombinationsfarbtönen unter begleitender Verwendung weiterer Dispersions-Blaufarbstoffe von chemisch unterschiedlicher Struktur als die Azoverbindungen der Formel I bis IV, z.B. anthrachinoider blauer Dispersionsfarbstoffe, gegebenenfalls noch im Beisein von Dispersionsfarbstoff-Mischkomponenten unterschiedlicher Konstitution, welche von sich aus andere Nuancen als Blau erbringen. Ein Färbeverfahren der genannten Art sowie die Verwendung der neuen Farbstoffpräparationen auf der erwähnten Grundlage stellen zugleich weitere Gegenstände der vorliegenden Erfindung dar.

Als besonders vorteilhaft hat sich erfindungsgemäß eine Farbstoffpräparation erwiesen, bestehend aus 50 bis 70 Gewichtsteilen eines blauen Dispersionsfarbstoffs der

allgemeinen Formel V (= Formel I, worin $R^1$ und $R^2$ = $C_2H_5$) und 30 bis 50 Gewichtsteilen eines blauen Dispersionsfarbstoffs der allgemeinen Formel VI (= Formel II, worin $R^1$ und $R^2$ = $C_2H_5$, $R^3$ = $CH_3$):

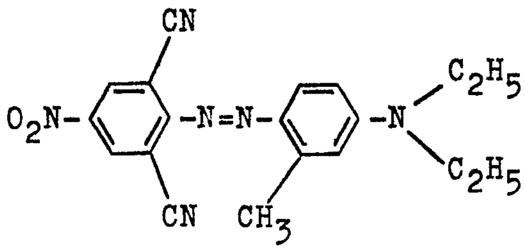

(V),

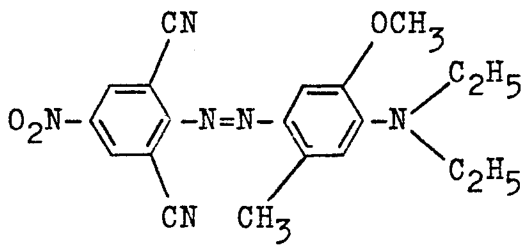

(VI).

Ebenfalls wertvolle Eigenschaften besitzt erfindungsgemäß eine Kombination von 50 bis 70 Gewichtsteilen eines blauen Dispersionsfarbstoffs der allgemeinen Formel V, 30 bis 50 Gewichtsteilen eines blauen Dispersionsfarbstoffs der allgemeinen Formel VI und 10 bis 20 Gewichtsteilen eines blauen Dispersionsfarbstoffs der allgemeinen Formel VII (= Formel IV, worin $R^1$ und $R^2$ = $C_2H_5$, $R^3$ = $CH_3$, mit der obengenannten Bedeutung von $R^4$ = Chlor oder Brom):

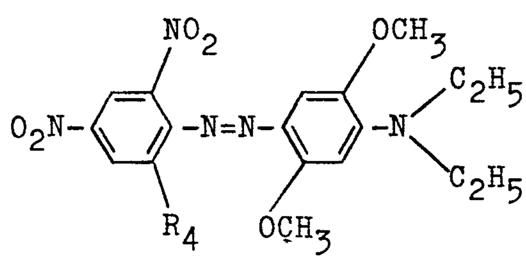

(VII).

Von den Farbstoffen der Formel I kommen als Mischungskomponenten die Farbstoffe der folgenden Tabelle I in Betracht:

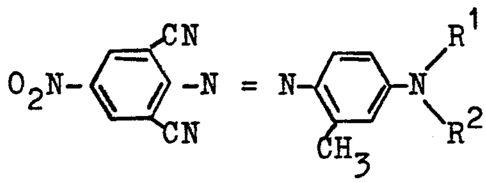

(I)

Tabelle I

| $R^1$ | $R^2$ | $R^1$ | $R^2$ |
|---|---|---|---|
| $-CH_3$ | $-CH_3$ | | |
| $-CH_3$ | $-C_2H_5$ | $-C_2H_5$ | $-C_2H_5$ |
| $-CH_3$ | $-CH_2CH_2CH_3$ | $-C_2H_5$ | $-CH_2CH_2CH_3$ |
| $-CH_3$ | 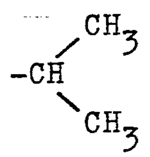 | $-C_2H_5$ | 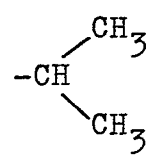 |
| $-CH_3$ | $-CH_2-CH_2-CH_2-CH_3$ | $-C_2H_5$ | $-CH_2-CH_2-CH_2-CH_3$ |
| $-CH_3$ | 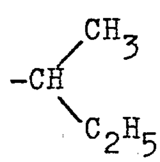 | $-C_2H_5$ | 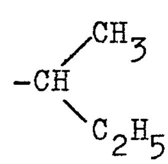 |
| $-CH_3$ | $-CH_2-CH=CH_2$ | $-C_2H_5$ | $-CH_2-CH=CH_2$ |
| $-CH_3$ | $-CH-CH=CH_2$<br>\|<br>$CH_3$ | $-C_2H_5$ | $-CH-CH=CH_2$<br>\|<br>$CH_3$ |
| $-CH_3$ | $-CH_2-C=CH_2$<br>\|<br>$CH_3$ | $-C_2H_5$ | $-CH_2-C=CH_2$<br>\|<br>$CH_3$ |
| $-CH_3$ | $-CH_2-CH=CH-CH_3$ | $-C_2H_5$ | $-CH_2-CH=CH-CH_3$ |

Fortsetzung Tabelle I

| $R^1$ | $R^2$ |
|---|---|
| $-CH_2-CH_2-CH_3$ | $-CH_2-CH_2-CH_3$ |
| $-CH_2-CH_2-CH_3$ | 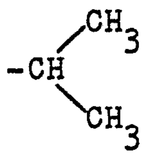 |
| $-CH_2-CH_2-CH_3$ | $-CH_2-CH_2-CH_2-CH_3$ |
| $-CH_2-CH_2-CH_3$ | 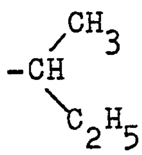 |
| $-CH_2-CH_2-CH_3$ | $-CH_2-CH=CH_2$ |
| $-CH_2-CH_2-CH_3$ | 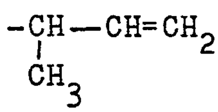 |
| $-CH_2-CH_2-CH_3$ | 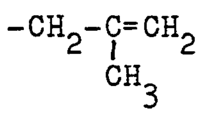 |
| $-CH_2-CH_2-CH_3$ | $-CH_2-CH=CH-CH_3$ |
| $-CH_2-CH=CH_2$ | $-CH_2-CH=CH_2$ |
| " | 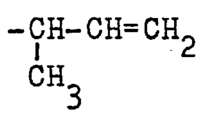 |
| " | 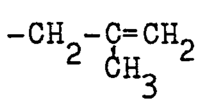 |
| " | $-CH_2-CH=CH-CH_3$ |
| " | $-CH_2-CH=CH-CH_3$ |

| $R^1$ | $R^2$ |
|---|---|
| 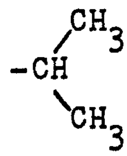 | 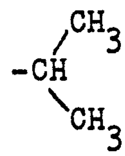 |
| " | $-CH_2-CH_2-CH_2-CH_3$ |
| " | 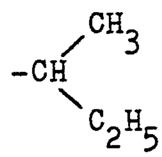 |
| " | $-CH_2-CH=CH_2$ |
| " | 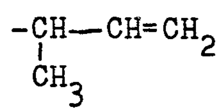 |
| " | 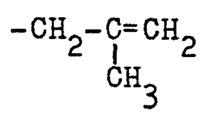 |
| " | $-CH_2-CH=CH-CH_3$ |

Fortsetzung Tabelle I

| $R^1$ | $R^2$ | $R^1$ | $R^2$ |
|---|---|---|---|
| $-CH_2-CH_2-CH_2-CH_3$ | $-CH_2-CH_2-CH_2-CH_3$ | " | $CH_3$<br>$-CH$<br>$C_2H_5$ |
| $-CH_2-CH_2-CH_2-CH_3$ | $CH_3$<br>$-CH$<br>$C_2H_5$ | $CH_3$<br>$-CH$<br>$C_2H_5$ | $-CH_2-CH=CH_2$ |
| " | $-CH_2-CH=CH_2$ | " | $-CH-CH=CH_2$<br>$CH_3$ |
| " | $-CH-CH=CH_2$<br>$CH_3$ | " | $-CH_2-C=CH_2$<br>$CH_3$ |
| " | $-CH_2-C=CH_2$<br>$CH_3$ | " | $-CH_2-CH=CH-CH_3$ |
| " | $-CH_2-CH=CH-CH_3$ | $-CH_2-C=CH_2$<br>$CH_3$ | $-CH_2-C=CH_2$<br>$CH_3$ |
| $-CH-CH=CH_2$<br>$CH_3$ | $-CH-CH=CH_2$<br>$CH_3$ | " | $-CH_2-CH=CH-CH_3$ |
| " | $-CH_2-C=CH_2$<br>$CH_3$ | $-CH_2-CH=CH-CH_3$ | $-CH_2-CH=CH-CH_3$ |
| " | $-CH_2-CH=CH-CH_3$ | | |

Von den Farbstoffen der Formel II kommen als Mischungskomponenten die Farbstoffe der folgenden Tabelle II in Betracht

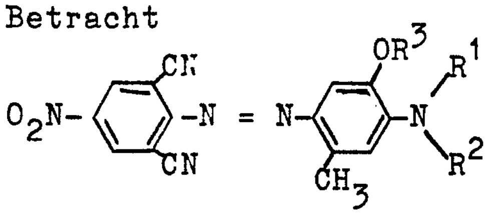

(II)

Tabelle II

| $R^1$ | $R^2$ | $R^3$ | $R^1$ | $R^2$ | $R^3$ |
|---|---|---|---|---|---|
| $-CH_3$ | $-CH_3$ | $-CH_3$ | $-C_2H_5$ | $-C_2H_5$ | $-CH_3$ |
| " | $-C_2H_5$ | " | " | $-CH_2CH_2CH_3$ | " |
| " | $-CH_2CH_2CH_3$ | " | " | 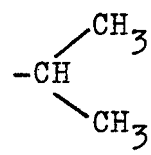 | " |
| " | 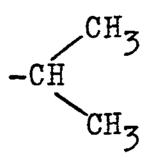 | " | " | $-CH_2-CH_2-CH_2-CH_3$ | " |
| " | $-CH_2-CH_2-CH_2-CH_3$ | " | " | 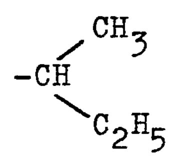 | " |
| " | 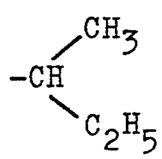 | " | " | $-CH-CH=CH_2$ | " |
| " | $-CH_2-CH=CH_2$ | " | " | 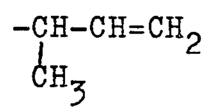 | " |
| " | 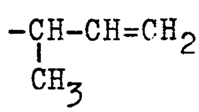 | " | " | 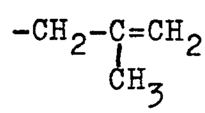 | " |
| " | 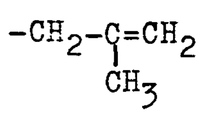 | " | " | $-CH_2-CH=CH-CH_3$ | " |
| " | $-CH_2-CH=CH-CH_3$ | " | | | |

Fortsetzung Tabelle II

| $R^1$ | $R^2$ | $R^3$ |
|---|---|---|
| $-CH_2CH_2-CH_3$ | $-CH_2-CH_2-CH_3$ | $-CH_3$ |
| " | 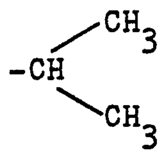 | " |
| " | $-CH_2-CH_2-CH_2-CH_3$ | " |
| " | 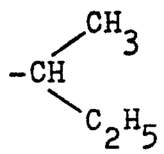 | " |
| " | 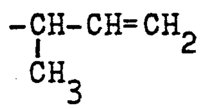 | " |
| " | 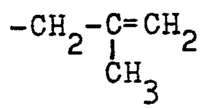 | " |

| $R^1$ | $R^2$ | $R^3$ |
|---|---|---|
| 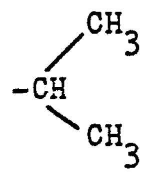 | 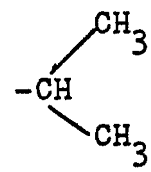 | $-CH_3$ |
| " | $-CH_2-CH_2-CH_2-CH_3$ | " |
| " | 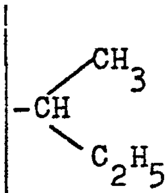 | " |
| " | $-CH_2-CH=CH_2$ | " |
| " | 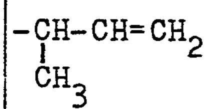 | " |
| " | 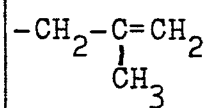 | " |
| " | $-CH_2-CH=CH-CH_3$ | " |
| 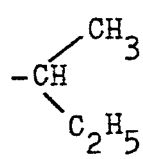 | 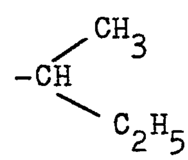 | " |
| " | $-CH_2-CH=CH_2$ | " |
| " | 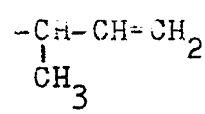 | " |
| " | 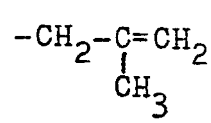 | " |
| " | $-CH_2-CH=CH-CH_3$ | " |

Fortsetzung Tabelle II

| $R^1$ | $R^2$ | $R^3$ | $R^1$ | $R^2$ | $R^3$ |
|---|---|---|---|---|---|
| $-CH_2-CH_2-CH_2-CH_3$ | $-CH_2-CH_2-CH_2-CH_3$ | $-CH_3$ | $-CH_2-CH=CH_2$ | $-CH_2-CH=CH_2$ | $CH_3$ |
| " | 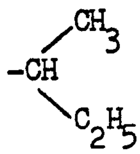 | " | " | $-CH-CH=CH_2$ | " |
| " | $-CH_2-CH=CH_2$ | " | " | 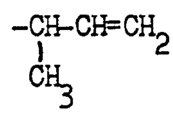 | " |
| " | 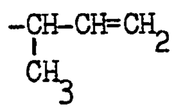 | " | " | 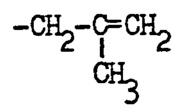 | " |
| " | 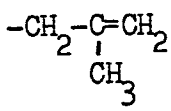 | " | " | $-CH_2-CH=CH-CH_3$ | " |
| " | $-CH_2-CH=CH-CH_3$ | " | 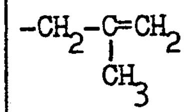 | 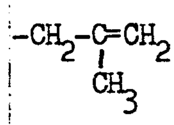 | " |
| 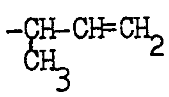 | 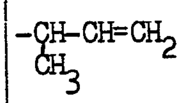 | " | " | $-CH_2-CH=CH-CH_3$ | " |
| " | 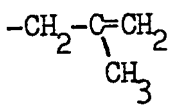 | " | $-CH_2-CH=CH-CH_3$ | $-CH_2-CH=CH-CH_3$ | " |
| | $-CH_3-CH_2=CH-CH_3$ | " | | | |

0147783

Fortsetzung Tabelle II

| $R^1$ | $R^2$ | $R^3$ | $R^1$ | $R^2$ | $R^3$ |
|---|---|---|---|---|---|
| $-CH_3$ | $-CH_3$ | $-C_2H_5$ | $-C_2H_5$ | $-C_2H_5$ | $-C_2H_5$ |
| " | $-C_2H_5$ | " | " | $-CH_2CH_2CH_3$ | " |
| | $-CH_2-CH_2-CH_3$ | " | " | 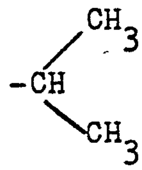 | " |
| " | 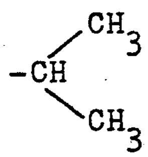 | " | " | $-CH_2-CH_2-CH_2-CH_3$ | " |
| " | $-CH_2-CH_2-CH_2-CH_3$ | " | " | 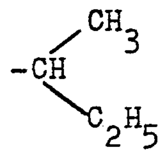 | " |
| " | 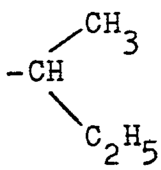 | " | " | $-CH_2-CH=CH_2$ | " |
| " | $-CH_2-CH=CH_2$ | " | " | 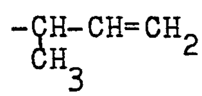 | " |
| " | 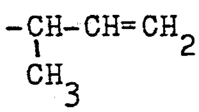 | " | " | 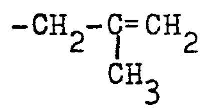 | " |
| " | 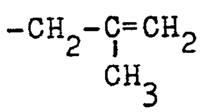 | " | " | $-CH_2-CH=CH-CH_3$ | " |
| " | $-CH_2-CH=CH-CH_3$ | | | | |

Fortsetzung Tabelle II

| $R^1$ | $R^2$ | $R^3$ | $R^1$ | $R^2$ | $R^3$ |
| --- | --- | --- | --- | --- | --- |
| $-CH_2-CH_2-CH_3$ | $-CH_2-CH_2-CH_3$ | $-C_2H_5$ | 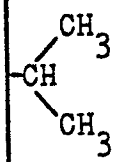 | 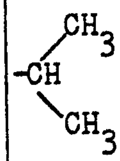 | $-C_2H_5$ |
| " | 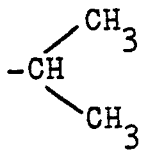 | " | " | $-CH_2-CH_2-CH_2-CH_3$ | " |
| " | $-CH_2-CH_2-CH_2-CH_3$ | " | " | 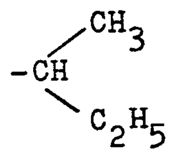 | " |
| " | 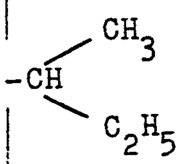 | " | " | $-CH_2-CH=CH_2$ | " |
| " | $-CH_2-CH=CH_2$ | " | " | 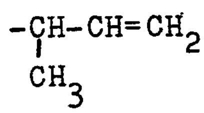 | " |
| " | 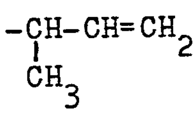 | " | " | 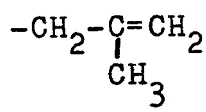 | " |
| " | 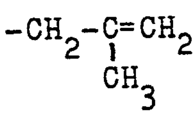 | " | " | $-CH_2-CH=CH-CH_3$ | " |

0147783

Fortsetzung Tabelle II

| $R^1$ | $R^2$ | $R^3$ | $R^1$ | $R^2$ | $R^3$ |
|---|---|---|---|---|---|
| $-CH_2-CH_2-CH_2-CH_3$ | $-CH_2-CH_2-CH_2-CH_3$ | $-C_2H_5$ | 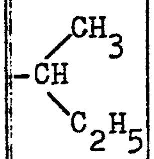 | 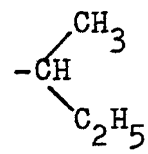 | $-C_2H_5$ |
| " | 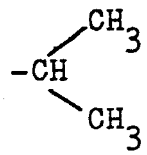 | " | " | $-CH_2-CH=CH_2$ | " |
| " | $-CH_2-CH=CH_2$ | " | " | 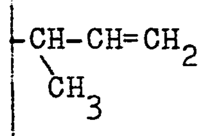 | " |
| " | 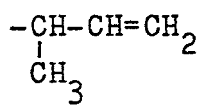 | " | " | 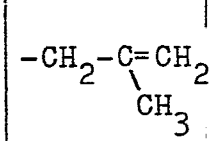 | " |
| " | 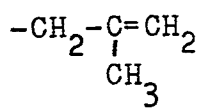 | " | " | $-CH_2-CH=CH-CH_3$ | " |
| " | $-CH_2-CH=CH-CH_3$ | " | " | | " |

Fortsetzung Tabelle II

| $R^1$ | $R^2$ | $R^3$ |
|---|---|---|
| $-CH_2-CH=CH_2$ | $-CH_2-CH=CH_2$ | $-C_2H_5$ |
| " | $-CH-CH=CH_2$<br>$CH_3$ | " |
| " | $-CH_2-C=CH_2$<br>$CH_3$ | " |
| " | $-CH_2-CH=CH-CH_3$ | " |
| " | | |

| $R^1$ | $R^2$ | $R^3$ | $R^1$ | $R^2$ | $R^3$ |
|---|---|---|---|---|---|
| $-CH-CH=CH_2$<br>$CH_3$ | $-CH-CH=CH_2$<br>$CH_3$ | $-C_2H_5$ | $-CH_2-C=CH_2$<br>$CH_3$ | $-CH_2-C=CH_2$<br>$CH_3$ | $-C_2H_5$ |
| " | $-CH_2-C=CH_2$<br>$CH_3$ | " | " | $-CH_2-CH=CH-CH_3$ | " |
| " | $-CH_2-CH=CH-CH_3$ | " | $-CH_2-CH=CH-CH_3$ | $-CH_2-CH=CH-CH_3$ | " |

Von den Farbstoffen der Formel III kommen als Mischungskomponenten die Farbstoffe der folgenden Tabelle IIIa in Betracht:

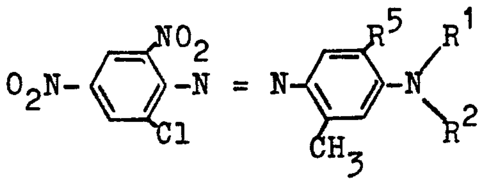

(III, $R^4$=Cl)

Tabelle IIIa

| $R^1$ | $R^2$ | $R^5$ | $R^1$ | $R^2$ | $R^5$ |
|---|---|---|---|---|---|
| $-CH_3$ | $-CH_3$ | -H | | | |
| " | $-C_2H_5$ | " | $-C_2H_5$ | $-C_2H_5$ | -H |
| " | $-CH_2-CH_2-CH_3$ | " | " | $-CH_2-CH_2-CH_3$ | " |
| " | 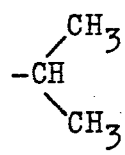 | " | " | 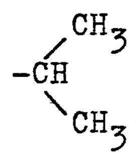 | " |
| " | $-CH_2-CH_2-CH_2-CH_3$ | " | " | $-CH_2-CH_2-CH_2-CH_3$ | " |
| " | 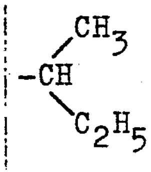 | " | " | 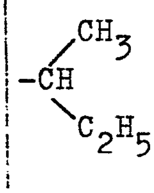 | " |
| " | $-CH_2-CH=CH_2$ | " | " | $-CH_2-CH=CH_2$ | " |
| " | 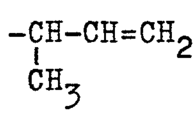 | " | " | 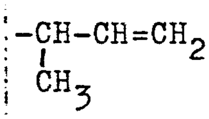 | " |
| " | 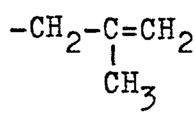 | " | " | 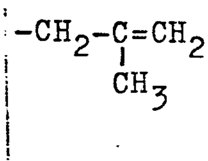 | " |
| " | $-CH_2-CH=CH-CH_3$ | " | " | $-CH_2-CH=CH-CH_3$ | " |

Fortsetzung Tabelle IIIa

| $R^1$ | $R^2$ | $R^5$ | $R^1$ | $R^2$ | $R^5$ |
|---|---|---|---|---|---|
| $-CH_2-CH_2-CH_3$ | $-CH_2-CH_2-CH_3$ | -H | 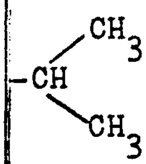 | 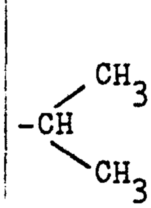 | -H |
| " | 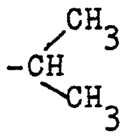 | " | " | $-CH_2-CH_2-CH_2-CH_3$ | " |
| " | $-CH_2-CH_2-CH_2-CH_3$ | " | " | 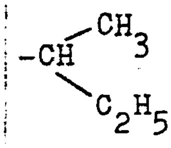 | " |
| " | 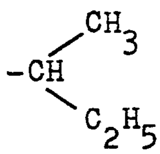 | " | " | $-CH_2-CH=CH_2$ | " |
| " | $-CH_2-CH=CH_2$ | " | " | 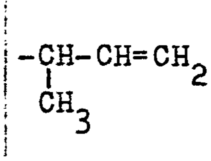 | " |
| " | 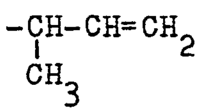 | " | " | 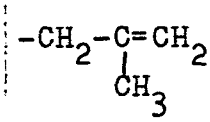 | " |
| " | 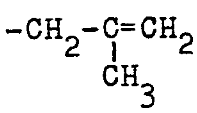 | " | " | $-CH_2-CH=CH-CH_3$ | " |
| " | $-CH_2-CH=CH-CH_3$ | " | | | |

<u>Fortsetzung Tabelle IIIa</u>

| $R^1$ | $R^2$ | $R^5$ | $R^1$ | $R^2$ | $R^5$ |
|---|---|---|---|---|---|
| $-CH_2-CH_2-CH_2-CH_3$ | $-CH_2-CH_2-CH_2-CH_3$ | -H | 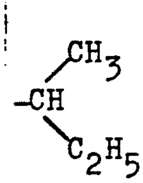 | 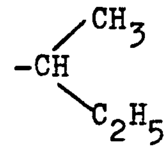 | -H |
| " | 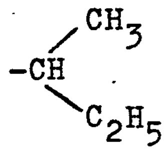 | " | " | 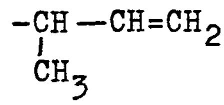 | " |
| " | $-CH_2-CH=CH_2$ | | | $-CH_2-CH=CH_2$ | " |
| " | 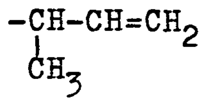 | " | " | 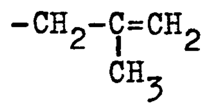 | " |
| " | 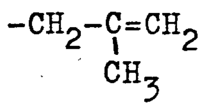 | " | " | $-CH_2-CH=CH-CH_3$ | " |
| " | $-CH_2-CH=CH-CH_3$ | " | | | |
| $-CH_2-CH=CH_2$ | $-CH_2-CH=CH_2$ | " | | | |
| " | 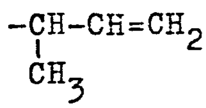 | " | | | |
| " | 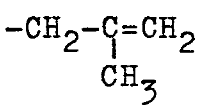 | " | | | |
| " | $-CH_2-CH=CH-CH_3$ | " | | | |

Fortsetzung Tabelle IIIa

| $R^1$ | $R^2$ | $R^5$ | $R^1$ | $R^2$ | $R^5$ |
|---|---|---|---|---|---|
| 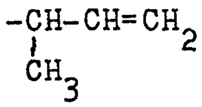 | 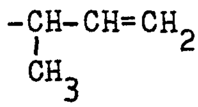 | -H | 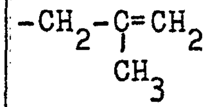 | 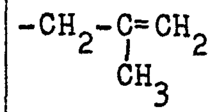 | -H |
| " | 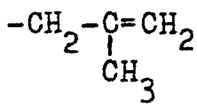 | " | " | $-CH_2-CH=CH-CH_3$ | " |
| " | $-CH_2-CH=CH-CH_3$ | " | $-CH_2-CH=CH-CH_3$ | $-CH_2-CH=CH-CH_3$ | " |

| $R^1$ | $R^2$ | $R^5$ | $R^1$ | $R^2$ | $R^5$ |
|---|---|---|---|---|---|
| $-CH_3$ | $-CH_3$ | $-OCH_3$ | $-C_2H_5$ | $-C_2H_5$ | $-OCH_3$ |
| " | $-C_2H_5$ | " | " | $-CH_2-CH_2-CH_3$ | " |
| " | $-CH_2-CH_2-CH_3$ | " | " | 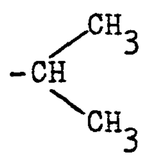 | " |
| " | 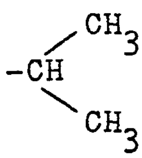 | " | " | $-CH_2-CH_2=CH_2-CH_3$ | " |
| " | $-CH_2-CH_2-CH_2-CH_3$ | " | " | 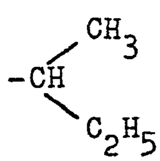 | " |
| " | 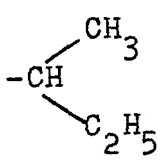 | " | " | $-CH_2-CH=CH_2$ | " |
| " | $-CH_2-CH=CH_2$ | " | " | 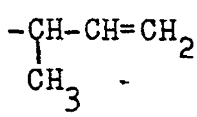 | " |

Fortsetzung Tabelle IIIa

| $R^1$ | $R^2$ | $R^5$ | $R^1$ | $R^2$ | $R^5$ |
|---|---|---|---|---|---|
| $-CH_3$ | 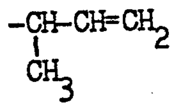 | $-OCH_3$ | $-C_2H_5$ | 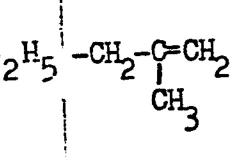 | $-OCH_3$ |
| " | 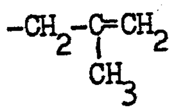 | " | " | $-CH_2-CH=CH-CH_3$ | " |
| " | $-CH_2-CH=CH-CH_3$ | " | | | |

| $R^1$ | $R^2$ | $R^5$ | $R^1$ | $R^2$ | $R^5$ |
|---|---|---|---|---|---|
| $-CH_2-CH_2-CH_3$ | $-CH_2-CH_2-CH_3$ | $-OCH_3$ | $-CH_2-CH_2-CH_2-CH_3$ | 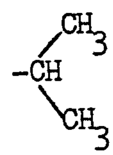 | $-OCH_3$ |
| " | 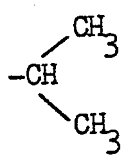 | " | " | $-CH_2-CH_2-CH_2-CH_3$ | " |
| " | $-CH_2-CH_2-CH_2-CH_3$ | " | " | 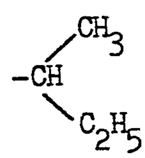 | " |
| " | 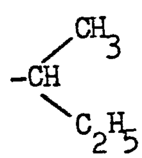 | " | " | $-CH_2-CH=CH_2$ | " |
| " | $-CH_2-CH=CH_2$ | " | " | 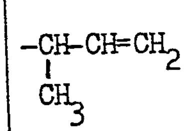 | " |
| " | 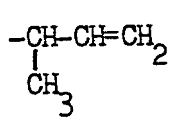 | " | " | $-CH_2-CH=CH-CH_3$ | " |
| " | $-CH_2-CH=CH-CH_3$ | " | $-CH_2-CH=CH_2$ | $-CH_2-CH=CH_2$ | " |

Fortsetzung Tabelle IIIa

| $R^1$ | $R^2$ | $R^5$ | $R^1$ | $R^2$ | $R^5$ |
|---|---|---|---|---|---|
| $-CH_3$ | $-CH_3$ | $-OC_2H_5$ | $-C_2H_5$ | $-C_2H_5$ | $-OC_2H_5$ |
| " | $-C_2H_5$ | " | " | $-CH_2-CH_2-CH_3$ | " |
| " | $-CH_2-CH_2-CH_3$ | " | " | 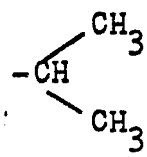 | " |
| " | 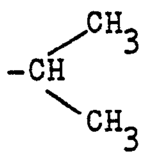 | " | " | $-CH_2-CH_2-CH_2-CH_3$ | " |
| " | $-CH_2-CH_2-CH_2-CH_3$ | " | " | 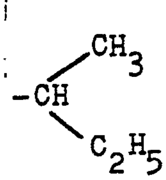 | " |
| " | 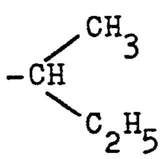 | " | " | $-CH_2-CH=CH_2$ | " |
| " | $-CH_2-CH=CH_2$ | " | " | 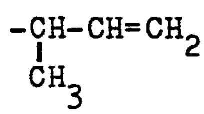 | " |
| " | 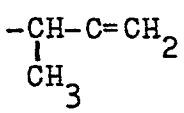 | " | " | 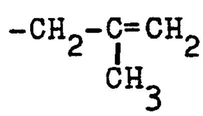 | " |
| " | 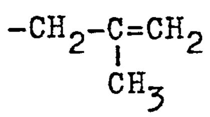 | " | " | $-CH_2-CH=CH-CH_3$ | " |
| " | $-CH_2-CH=CH-CH_3$ | " | | | |

Fortsetzung Tabelle IIIa

| $R^1$ | $R^2$ | $R^5$ | $R^1$ | $R^2$ | $R^5$ |
|---|---|---|---|---|---|
| $-CH_2-CH_2-CH_3$ | $-CH_2-CH_2-CH_3$ | $-OC_2H_5$ | $-CH_2-CH_2-CH_2-CH_3$ | 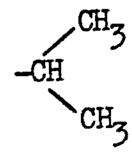 | $-OC_2H_5$ |
| " | 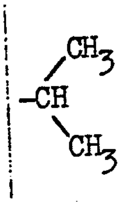 | " | " | $-CH_2-CH_2-CH_2-CH_3$ | " |
| " | $-CH_2-CH_2-CH_2-CH_3$ | " | " | 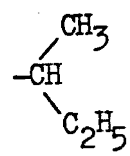 | " |
| " | 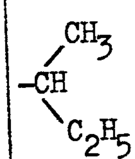 | " | " | $-CH_2-CH{=}CH_2$ | " |
| " | 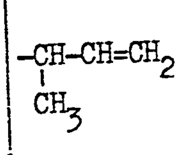 | " | " | 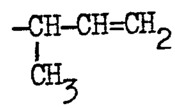 | " |
| " | 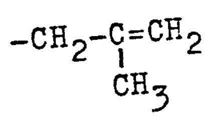 | " | " | $-CH_2-CH{=}CH-CH_3$ | " |
| " | $-CH_2-CH{=}CH-CH_3$ | " | $-CH_2-CH{=}CH_2$ | $-CH_2{=}CH{=}CH_2$ | " |

Von den Farbstoffen der Formel III kommen als Mischungskomponenten die Farbstoffe der folgenden Tabelle IIIb in Betracht:

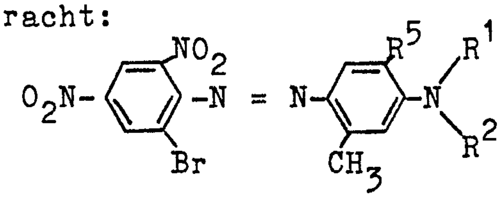

(III, $R^4$=Br)

Tabelle IIIb

| $R^1$ | $R^2$ | $R^5$ | $R^1$ | $R^2$ | $R^5$ |
|---|---|---|---|---|---|
| $-CH_3$ | $-CH_3$ | -H | $-C_2H_5$ | $-C_2H_5$ | -H |
| | $-C_2H_5$ | " | " | $-CH_2-CH_2-CH_3$ | " |
| " | $-CH_2-CH_2-CH_3$ | " | " | 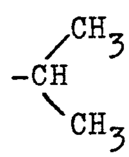 | " |
| " | 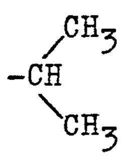 | " | " | $-CH_2-CH_2-CH_2-CH_3$ | " |

| $R^1$ | $R^2$ | $R^5$ | $R^1$ | $R^2$ | $R^5$ |
|---|---|---|---|---|---|
| $-CH_3$ | $-CH_2-CH_2-CH_2-CH_3$ | -H | $-C_2H_5$ | 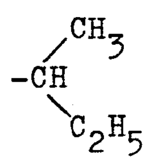 | -H<br>" |
| " | 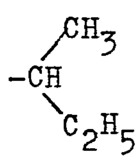 | " | " | $-CH_2-CH=CH_2$ | " |
| " | $-CH_2-CH=CH_2$ | " | " | 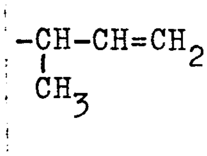 | " |
| " | 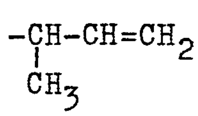 | " | " | 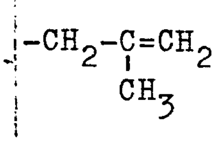 | " |
| " | 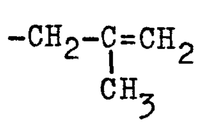 | " | " | $-CH_2-CH=CH-CH_3$ | " |
| " | $-CH_2-CH=CH-CH_3$ | " | " | | |

Fortsetzung Tabelle IIIb

| $R^1$ | $R^2$ | $R^5$ | $R^1$ | $R^2$ | $R^5$ |
|---|---|---|---|---|---|
| $-CH_2-CH_2-CH_3$ | $-CH_2-CH_2-CH_3$ | -H | 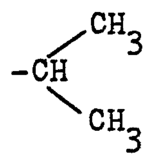 | 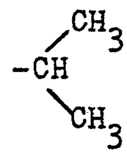 | -H |
| " | 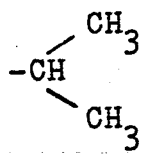 | " | " | $-CH_2-CH_2-CH_2-CH_3$ | " |
| | $-CH_2-CH_2-CH_2-CH_3$ | " | " | 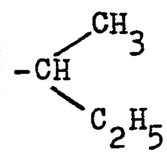 | " |

| $R^1$ | $R^2$ | $R^5$ | $R^1$ | $R^2$ | $R^5$ |
|---|---|---|---|---|---|
| $-CH_2-CH_2-CH_3$ | 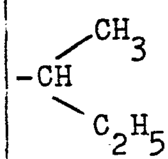 | -H | 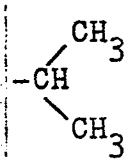 | $-CH_2-CH=CH_2$ | -H |
| " | $-CH_2-CH=CH_2$ | " | " | 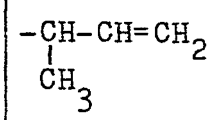 | " |
| " | 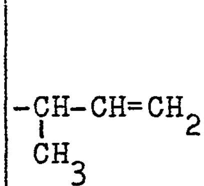 | " | " | 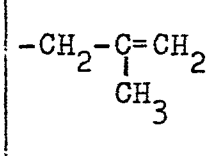 | " |
| " | 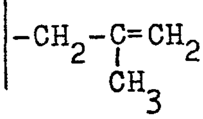 | " | " | $-CH_2-CH=CH-CH_3$ | " |

| $R^1$ | $R^2$ | $R^5$ | $R^1$ | $R^2$ | $R^5$ |
|---|---|---|---|---|---|
| $-CH_2-CH_2-CH_2-CH_3$ | $-CH_2-CH_2-CH_2-CH_3$ | -H | 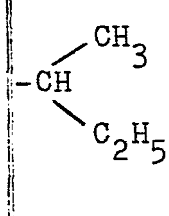 | 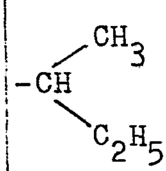 | -H |
| " | 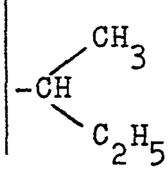 | " | " | $-CH_2-CH=CH_2$ | " |

Fortsetzung Tabelle IIIb

| $R^1$ | $R^2$ | $R^5$ | $R^1$ | $R^2$ | $R^5$ |
|---|---|---|---|---|---|
| $-CH_2-CH_2-CH_2-CH_3$ | $-CH_2-CH_2-CH_2-CH_3$ | -H | 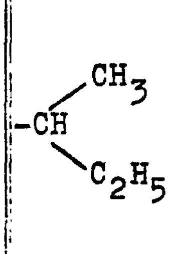 | $-CH-CH=CH_2$<br>$CH_3$ | -H |
| " | $-CH-CH=CH_2$<br>$CH_3$ | " | " | $-CH-C=CH_2$<br>$CH_3$ | " |
| " | $-CH_2-C=CH_2$<br>$CH_3$ | " | " | $-CH_2-CH=CH-CH_3$ | " |
| " | $-CH_2-CH=CH-CH_3$ | " | | | |
| $-CH_2-CH=CH_2$ | $-CH_2-CH=CH_2$ | " | | | |
| " | $-CH-CH=CH_2$<br>$CH_3$ | " | | | |
| " | $-CH_2-C=CH_2$<br>$CH_3$ | " | | | |
| " | $-CH_2-CH=CH-CH_3$ | " | | | |

| $R^1$ | $R^2$ | $R^5$ | $R^1$ | $R^2$ | $R^5$ |
|---|---|---|---|---|---|
| $-CH-CH=CH_2$<br>$CH_3$ | $-CH-CH=CH_2$<br>$CH_3$ | -H | $-CH_2-C=CH_2$<br>$CH_3$ | $-CH_2-C=CH_2$<br>$CH_3$ | -H |
| " | $-CH_2-C=CH_2$<br>$CH_3$ | " | " | $-CH_2-CH=CH-CH_3$ | " |
| " | $-CH_2-CH=CH-CH_3$ | " | $-CH_2-CH=CH-CH_3$ | $-CH_2-CH=CH-CH_3$ | |

Fortsetzung Tabelle IIIb

| $R^1$ | $R^2$ | $R^5$ | $R^1$ | $R^2$ | $R^5$ |
|---|---|---|---|---|---|
| $-CH_3$ | $-CH_3$ | $-OCH_3$ | $-C_2H_5$ | $-C_2H_5$ | $-OCH_3$ |
| " | $-CH_2H_5$ | " | " | $-CH_2-CH_2-CH_3$ | " |
| " | $-CH_2-CH_2-CH_3$ | " | " | 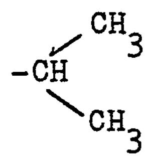 | " |
| " | 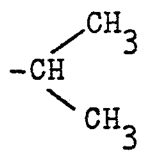 | " | " | $-CH_2-CH_2-CH_2-CH_3$ | " |
| " | $-CH_2-CH-CH-CH_3$ | " | " | 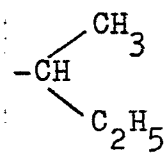 | " |
| " | 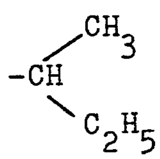 | " | " | $-CH_2-CH=CH_2$ | " |
| " | $-CH_2-CH=CH_2$ | " | " | 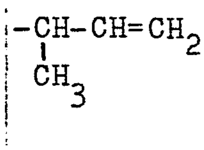 | " |
| " | 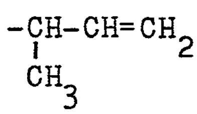 | " | " | 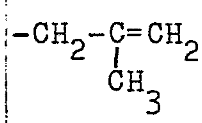 | " |
| " | 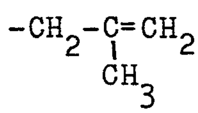 | " | " | $-CH_2-CH=CH-CH_3$ | " |
| " | $-CH_2-CH=CH-CH_3$ | " | | | |

Fortsetzung Tabelle IIIb

| $R^1$ | $R^2$ | $R^5$ | $R^1$ | $R^2$ | $R^5$ |
|---|---|---|---|---|---|
| $-CH_2-CH_2-CH_3$ | $-CH_2-CH_2-CH_3$ | $-OCH_3$ | $-CH_2-CH_2-CH_2-CH_3$ | $CH_3$<br>$-CH$<br>$CH_3$ | $-OCH_3$ |
| " | $CH_3$<br>$-CH$<br>$CH_3$ | " | " | $-CH_2-CH_2-CH_2-CH_3$ | " |
| " | $-CH_2-CH_2-CH_2-CH_3$ | " | " | $CH_3$<br>$-CH$<br>$C_2H_5$ | " |
| " | $CH_3$<br>$-CH$<br>$C_2H_5$ | " | " | $-CH_2-CH=CH_2$ | " |
| " | $-CH_2-CH=CH_2$ | " | | | |

| $R^1$ | $R^2$ | $R^5$ | $R^1$ | $R^2$ | $R^5$ |
|---|---|---|---|---|---|
| $-CH_2-CH_2-CH_3$ | $-CH-CH=CH_2$<br>$CH_3$ | $-OCH_3$ | $-CH_2-CH_2-CH_2-CH_3$ | $-CH_2-CH=CH-CH_3$ | $-OCH_3$ |
| " | $-CH-CH=CH_2$<br>$CH_3$ | " | " | $-CH-CH=CH_2$<br>$CH_3$ | " |
| " | $-CH_2-C=CH_2$<br>$CH_3$ | " | | | |
| " | $-CH_2-CH=CH-CH_3$ | " | $-CH_2-CH=CH_2$ | $-CH_2-CH=CH_2$ | " |

Fortsetzung Tabelle IIIb

| $R^1$ | $R^2$ | $R^5$ | $R^1$ | $R^2$ | $R^5$ |
|---|---|---|---|---|---|
| $-CH_3$ | $-CH_3$ | $-OC_2H_5$ | $-C_2H_5$ | $-C_2H_5$ | $-OC_2H_5$ |
| | $-C_2H_5$ | " | " | $-CH_2-CH_2-CH_3$ | " |
| | $-CH_2-CH_2-CH_3$ | " | " | 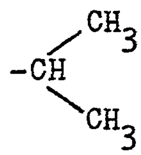 | " |
| " | 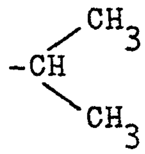 | " | " | $-CH_2-CH_2-CH_2-CH_3$ | " |
| " | $-CH_2-CH_2-CH_2-CH_3$ | " | " | 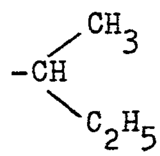 | " |
| " | 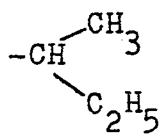 | " | " | $-CH_2-CH=CH_2$ | " |
| " | $-CH_2-CH=CH_2$ | " | " | 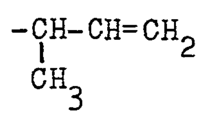 | " |

| $R^1$ | $R^2$ | $R^5$ | $R^1$ | $R^2$ | $R^5$ |
|---|---|---|---|---|---|
| $-CH_3$ | 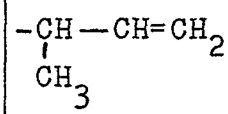 | $-OC_2H_5$ | $-C_2H_5$ | 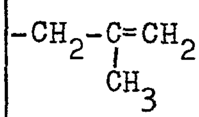 | $-OC_2H_5$ |
| " | 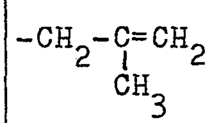 | " | " | $-CH_2-CH=CH-CH_3$ | " |
| " | $-CH_2-CH=CH-CH_3$ | " | | | |

Fortsetzung Tabelle IIIb

| $R^1$ | $R^2$ | $R^5$ | $R^1$ | $R^2$ | $R^5$ |
|---|---|---|---|---|---|
| $-CH_2-CH_2-CH_3$ | $-CH_2-CH_2-CH_3$ | $-OC_2H_5$ | $-CH_2-CH_2-CH_2-CH_3$ | 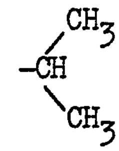 | $-OC_2H_5$ |
| " | 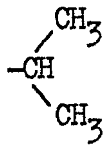 | " | " | $-CH_2-CH_2-CH_2-CH_3$ | " |
| " | $-CH_2-CH_2-CH_2-CH_3$ | " | " | 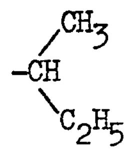 | " |
| " | 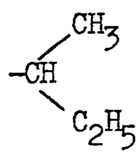 | " | " | $-CH_2-CH=CH_2$ | " |
| " | $-CH_2-CH=CH_2$ | " | " | 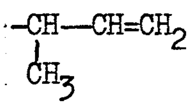 | " |
| " | 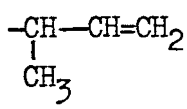 | " | " | $-CH_2-CH=CH-CH_3$ | " |
| | | | $-CH_2-CH=CH_2$ | $-CH_2-CH=CH_2$ | " |

Von den Farbstoffen der Formel IV kommen als Mischungskomponenten die Farbstoffe der folgenden Tabelle IVa in Betracht:

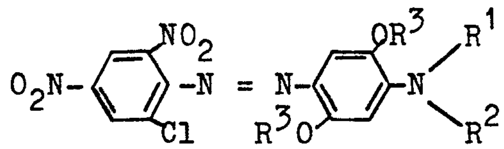

(IV, $R^4$=Cl)

Tabelle IVa

| $R^1$ | $R^2$ | $R^3$ | $R^1$ | $R^2$ | $R^3$ |
|---|---|---|---|---|---|
| $-CH_3$ | $-CH_3$ | $-CH_3$ | $-C_2H_5$ | $-C_2H_5$ | $-CH_3$ |
| | $-C_2H_5$ | " | " | $-CH_2-CH_2-CH_3$ | " |
| " | $-CH_2-CH_2-CH_3$ | " | " | 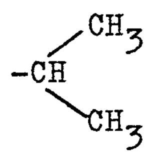 | " |
| " | 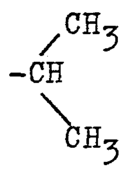 | " | " | $-CH_2-CH_2-CH_2-CH_3$ | " |
| " | $-CH_2-CH_2-CH_2-CH_3$ | " | " | 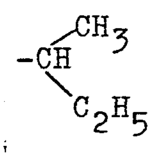 | " |
| " | 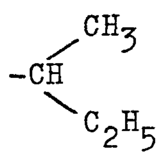 | | | $-CH_2-CH=CH_2$ | " |
| " | $-CH_2-CH=CH_2$ | " | " | 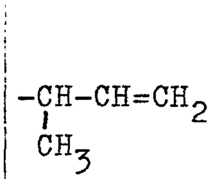 | " |
| " | 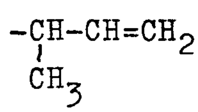 | | | 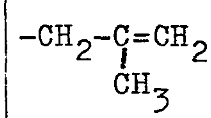 | " |
| " | 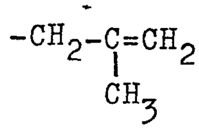 | " | " | $-CH_2-CH=CH-CH_3$ | " |
| " | $-CH_2-CH=CH-CH_3$ | " | | | |

Fortsetzung Tabelle IVa

| $R^1$ | $R^2$ | $R^3$ | $R^1$ | $R^2$ | $R^3$ |
|---|---|---|---|---|---|
| $-CH_2-CH_2-CH_3$ | $-CH_2-CH_2-CH_3$ | $-CH_3$ | $-CH_2-CH_2-CH_2-CH_3$ | 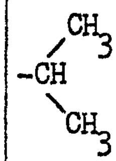 | $-CH_3$ |
| " | 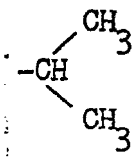 | " | " | $-CH_2-CH_2-CH_2-CH_3$ | " |
| " | $-CH_2-CH_2-CH_2-CH_3$ | " | " | 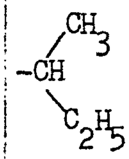 | " |
| " | 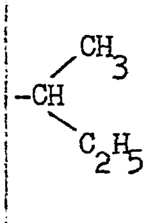 | " | " | $-CH_2-CH=CH_2$ | " |
| " | $-CH_2-CH=CH_2$ | " | " | 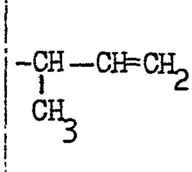 | " |
| " | 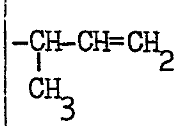 | " | " | $-CH_2-CH=CH-CH_3$ | " |
| | | | $-CH_2-CH=CH_2$ | $-CH_2-CH=CH_2$ | " |

Fortsetzung Tabelle IVa

| $R^1$ | $R^2$ | $R^3$ | $R^1$ | $R^2$ | $R^3$ |
|---|---|---|---|---|---|
| $-CH_3$ | $-CH_3$ | $-C_2H_5$ | $-C_2H_5$ | $-C_2H_5$ | $-C_2H_5$ |
| | $-C_2H_5$ | " | " | $-CH_2-CH_2-CH_3$ | " |

Fortsetzung Tabelle IVa

| $R^1$ | $R^2$ | $R^3$ | $R^1$ | $R^2$ | $R^3$ |
|---|---|---|---|---|---|
| $-CH_3$ | $-CH_2-CH_2-CH_3$ | $-C_2H_5$ | $-C_2H_5$ | 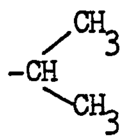 | $-C_2H_5$ |
| " | 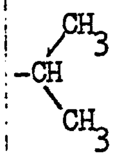 | " | " | $-CH_2-CH_2-CH_2-CH_3$ | " |
| " | $-CH_2-CH_2-CH_2-CH_3$ | " | " | 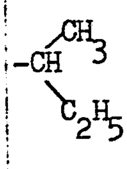 | " |
| " | 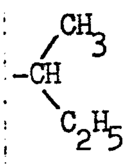 | " | " | $-CH_2-CH=CH_2$ | " |
| " | $-CH_2-CH=CH_2$ | " | " | 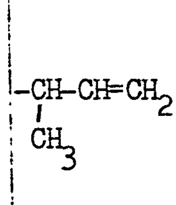 | " |
| " | 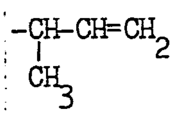 | " | " | 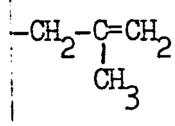 | " |
| " | 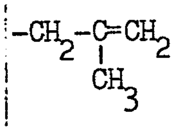 | " | " | $-CH_2-CH=CH-CH_3$ | " |
| " | $-CH_2-CH=CH-CH_3$ | " | | | |

| $R^1$ | $R^2$ | $R^3$ | $R^1$ | $R^2$ | $R^3$ |
|---|---|---|---|---|---|
| $-CH_2-CH_2-CH_3$ | $-CH_2-CH_2-CH_3$ | $-C_2H_5$ | $-CH_2-CH_2-CH_2-CH_3$ | 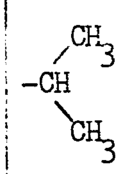 | $-C_2H_5$ |
| " | 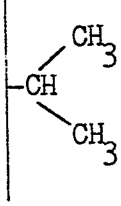 | " | " | $-CH_2-CH_2-CH_2-CH_3$ | " |

Fortsetzung Tabelle IVa

| $R^1$ | $R^2$ | $R^3$ | $R^1$ | $R^2$ | $R^3$ |
|---|---|---|---|---|---|
| | | $-C_2H_5$ | | | |
| $-CH_2-CH_2-CH_3$ | $-CH_2-CH_2-CH_2-CH_3$ | " | $-CH_2-CH_2-CH_2-CH_3$ | 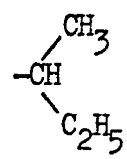 | $-C_2H_5$ |
| " | 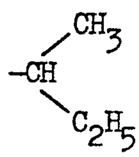 | " | " | $-CH_2-CH=CH_2$ | " |
| | $-CH-CH=CH_2$ | " | " | $-CH_2-CH=CH-CH_3$ | " |
| " | $-CH_2-CH=CH-CH_3$ | " | $-CH_2-CH=CH_2$ | $-CH_2-CH=CH_2$ | " |

Von den Farbstoffen der Formel IV kommen als Mischungskomponenten die Farbstoffe der folgenden Tabelle IVb in Betracht:

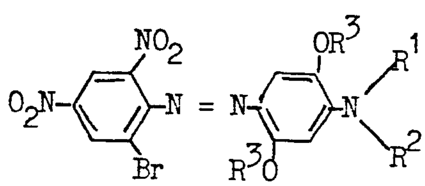

(IV, $R^4$=Br)

Tabelle IVb

| $R^1$ | $R^2$ | $R^3$ | $R^1$ | $R^2$ | $R^3$ |
|---|---|---|---|---|---|
| $-CH_3$ | $-CH_3$ | $-CH_3$ | $-C_2H_5$ | $-C_2H_5$ | $-CH_3$ |
| | $-C_2H_5$ | " | " | $-CH_2-CH_2-CH_3$ | " |
| " | $-CH_2-CH_2-CH_3$ | " | " | 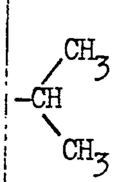 | " |
| " | 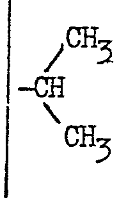 | " | " | $-CH_2-CH_2-CH_2-CH_3$ | " |

Fortsetzung Tabelle IVb

| $R^1$ | $R^2$ | $R^3$ | $R^1$ | $R^2$ | $R^3$ |
|---|---|---|---|---|---|
| $CH_3$ | $-CH_2-CH_2-CH_2-CH_3$ | $-CH_3$ | $-C_2H_5$ | 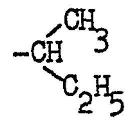 | $-CH_3$ |
| " | 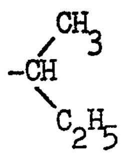 | " | " | $-CH_2-CH=CH_2$ | " |
| " | $-CH_2-CH=CH_2$ | " | " | 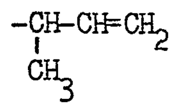 | " |
| " | 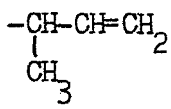 | " | " | 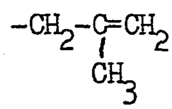 | " |
| " | 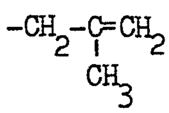 | " | " | $-CH_2-CH=CH-CH_3$ | " |
| " | $-CH_2-CH=CH-CH_3$ | " | | | |

| $R^1$ | $R^2$ | $R^3$ | $R^1$ | $R^2$ | $R^3$ |
|---|---|---|---|---|---|
| $-CH_2-CH_2-CH_3$ | $-CH_2-CH_2-CH_3$ | $-CH_3$ | $-CH_2-CH_2-CH_2-CH_3$ | 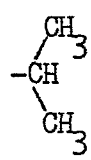 | $-CH_3$ |
| " | 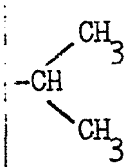 | " | | $-CH_2-CH_2-CH_2-CH_3$ | " |
| " | $-CH_2-CH_2-CH_2-CH_3$ | " | | 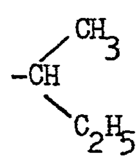 | " |

Fortsetzung Tabelle IVb

| $R^1$ | $R^2$ | $R^3$ | $R^1$ | $R^2$ | $R^3$ |
|---|---|---|---|---|---|
| $-CH_2-CH_2-CH_3$ | 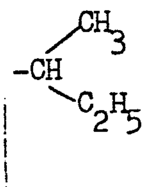 | $-CH_3$ | $-CH_2-CH_2-CH_2-CH_3$ | $-CH_2-CH=CH_2$ | $-CH_3$ |
| " | $-CH_2-CH=CH_2$ | " | " | 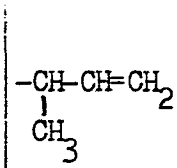 | " |
| " | 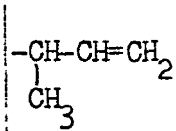 | " | | $-CH_2-CH=CH-CH_3$ | " |
| " | $-CH_2-CH=CH-CH_3$ | " | $-CH_2-CH=CH_2$ | $-CH_2-CH=CH_2$ | " |

| $R^1$ | $R^2$ | $R^3$ | $R^1$ | $R^2$ | $R^3$ |
|---|---|---|---|---|---|
| $-CH_3$ | $-CH_3$ | $-C_2H_5$ | $-C_2H_5$ | $-C_2H_5$ | $-C_2H_5$ |
| | $-C_2H_5$ | " | " | $-CH_2-CH_2-CH_3$ | " |
| " | $-CH_2-CH_2-CH_3$ | " | " | 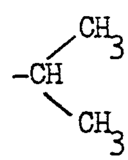 | " |
| " | 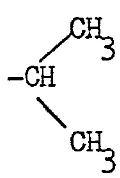 | " | " | $-CH_2-CH_2-CH_2-CH_3$ | " |
| " | $-CH_2-CH_2-CH_2-CH_3$ | " | " | 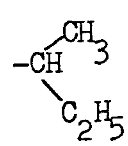 | " |

Fortsetzung Tabelle IVb

| $R^1$ | $R^2$ | $R^3$ | $R^1$ | $R^2$ | $R^3$ |
|---|---|---|---|---|---|
| $-CH_3$ | 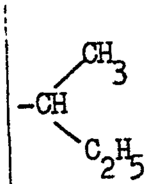 | $-C_2H_5$ | $-C_2H_5$ | $-CH_2-CH=CH_2$ | $-C_2H_5$ |
| " | $-CH_2-CH=CH_2$ | " | " | 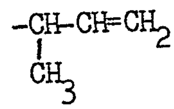 | " |
| " | 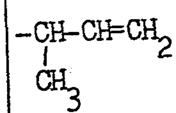 | " | " | 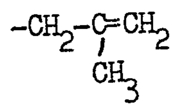 | " |
| " | 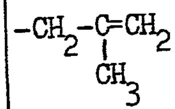 | " | " | $-CH_2-CH=CH-CH_3$ | " |
| " | $-CH_2-CH=CH-CH_3$ | " | | | |

| $R^1$ | $R^2$ | $R^3$ | $R^1$ | $R^2$ | $R^3$ |
|---|---|---|---|---|---|
| $-CH_2-CH_2-CH_3$ | $-CH_2-CH_2-CH_3$ | $-C_2H_5$ | $-CH_2-CH_2-CH_2-CH_3$ | 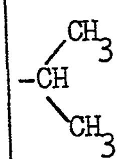 | $-C_2H_5$ |
| " | 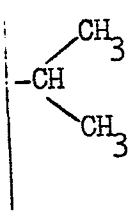 | " | " | $-CH_2-CH_2-CH_2-CH_3$ | " |

Fortsetzung Tabelle IVb

| $R^1$ | $R^2$ | $R^3$ | $R^1$ | $R^2$ | $R^3$ |
|---|---|---|---|---|---|
| $-CH_2-CH_2-CH_3$ | $-CH_2-CH_2-CH_2-CH_3$ | $-C_2H_5$ | $-CH_2-CH_2-CH_2-CH_3$ | 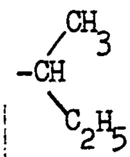 | $-C_2H_5$ |
| " | 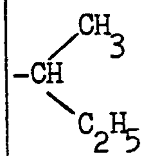 | " | " | $-CH_2-CH=CH_2$ | " |
| " | $-CH_2-CH=CH_2$ | " | " | 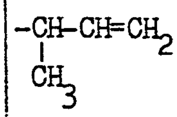 | " |
| " | 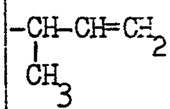 | " | " | $-CH_2-CH=CH-CH_3$ | " |
| " | $-CH_2-CH=CH-CH_3$ | " | $-CH_2-CH=CH_2$ | $-CH_2-CH=CH_2$ | " |

Die Herstellung der erfindungsgemäßen Präparationen aus den Dispersions-Blaufarbstoffen der Formeln I bis VII kann erfolgen durch das Mischen fertig gefinishter (in Wasser fein dispergierbarer) Farbstoffpräparationen der zugrundeliegenden Einzelfarbstoffe; durch gemeinsames Finishen der zugrundeliegenden Einzelfarbstoffe als Gemisch, d.h. durch gemeinsame Naßvermahlung von Mischungen aus den Einzelfarbstoffen in Gegenwart von herkömmlichen nichtionischen oder anionischen Dispergiermitteln (z.B. eines Ligninsulfonats) in einer üblichen Perlmühle, gegebenenfalls unter Bedingungen, wobei die Bildung von Mischkristallen aus den zugrundeliegenden Einzelfarbstoffen eintreten kann; oder durch Finishen eines aufgrund spezieller Umsetzungsbedingungen, beispielsweise durch gemeinsame Azo-Kupplung oder gemeinsamen Cyanaustausch, angefallenen Mischkristalles aus den dabei beteiligten einzelnen Farbstoffkomponenten.

Das Verfahren einer gemeinsamen Azo-Kupplung oder eines gemeinsamen Cyanaustauschs ist bekannt, beispielsweise kann der gemeinsame Cyanaustausch in der Weise durchgeführt werden, daß man Chlor- oder Bromsubstituenten in den Basis-Farbstoffen der Azo-Reihe bei 20° bis 220°C mit Metallcyaniden umsetzt (vgl. DE-B-1 544 563).

Mittels der erfindungsgemäß erläuterten Farbstoffpräparationen lassen sich als synthetisches Fasergut in erster Linie PES-Fasern auf Basis Polyethylenterephthalat, Polybutylenterephthalat oder Polycyclohexylenterephthalat colorieren, sowie auch Fasern, welche sich von Mischpolymerisaten solcher PES mit Di- oder Triethylenglykol, Isophtalsäure, oder Benzo-1,4-diphosphorige Säure als inkorporiertem Bestandteil herleiten. Es können aber ebensogut anders modifizierte PES-Fasern mit den erfindungsgemäßen Farbstoffmischungen gefärbt werden.

Weiterhin können zum erfindungsgemäßen Färben die PES-Fasern mit Fasermaterial natürlichen Ursprungs wie Wolle, Baumwolle, oder mit Regeneratcellulose in Mischungsverhältnissen von 10 bis 90 %, bevorzugt 30 bis 70 % PES-Anteil gemischt sein.

Die vorliegende Erfindung ist prinzipiell anwendbar auf das Färben des zuvor genannten Fasermaterials in verschiedenen Verarbeitungszuständen, beispielsweise als Flocke, Kammzug, Garn oder Stückware.

Das Färben von synthetischen Fasern bzw. deren Mischungen mit den erfindungsgemäßen Farbstoffmischungen oder Farbstoffmischkristallen wird nach dem herkömmlichen Auszieh-Verfahren ausgeführt. Besonders erwähnt werden soll in diesem Zusammenhang die Anwendung dieser Technik für das Ausziehfärben unter Kochtemperatur-Bedingungen der Behandlungsflotte, wobei in zur Atmosphäre offenen Färbeapparaturen (z.B. Haspelkufen) gegebenenfalls unter Mitwirkung von praxisüblichen Carriern auf Basis von beispielsweise o-Phenylphenol, Di- oder Trichlorbenzolen, Methyl- oder Chlornaphthalinen, Benzoesäure- oder Kresotinsäurealkylestern, Diphenyl u.a. sowie gegebenenfalls in Gegenwart üblicher Dispergier- und/oder Egalisiermittel gearbeitet wird. Darüber hinaus kann die Färbung auch nach einer konventionellen Hochtemperatur(HT)-Ausziehmethode bei Temperaturen zwischen 105° und 140°C erfolgen. An die eigentliche Färbung schließt sich vorteilhafterweise eine reduktive Reinigung oder eine dispergiermittelunterstützte Nachbehandlung der gefärbten Ware zur Entfernung nicht restlos fixierter Farbstoffanteile an.

Bei Einsatz von Mischungen aus PES-Fasern mit Wolle, Baumwolle oder Regeneratcellulose-Fasern kann die Begleitfaserkomponente mit geeigneten Farbstoffen im gleichen

oder in abweichendem Farbton (Melangen, Webmuster) vor oder nach Durchführung der PES-Färbung gefärbt werden.

Die Verwendung der erfindungsgemäßen Farbstoffmischungen bzw. Mischkristalle kann für sich (d.h. im Blau-Bereich) zur Erzeugung blauer Typfärbungen sowie auch in Kombination mit anderen handelsüblichen Dispersionsfarbstoffen von unterschiedlichem strukturellen Typ erfolgen, die ebenfalls blaue Nuancen ergeben, oder sogar in Verbindung mit solchen Farbstoffen, welche andere bunte Farbtöne als Blau liefern, beispielsweise gelben und roten Dispersionsfarbstoffen (Trichromie). Eine Kombinierbarkeit dieser Art ist allerdings an die Voraussetzung gebunden, daß unter den vorherrschenden Färbebedingungen alle beteiligten Farbstoffe im wesentlichen gleiches Ziehverhalten aufweisen. Die erzielbare Lichtechtheit dieser Färbungen ist im Blau- sowie im Trichromie-Bereich gut. Solche Nuancierfarbstoffe können bereits von vornherein in der färbefertigen Präparation der Farbstoffe mit den Formeln I bis IV vorhanden sein oder sie werden erst bei der Durchführung der Färbeoperation der Flotte unmittelbar zugesetzt.

Durch die Benutzung der erfindungsgemäßen Farbstoffmischungen oder Mischkristalle werden je nach Mischungsverhältnis der Einzelkomponenten auf dem Synthesefasermaterial klare tiefe Blau-Färbungen erhalten. Die Farbtiefe ist wesentlich höher als bei anthrachinoiden Blau-Farbstoffen und deren Mischungen mit verschiedenen Azo-Farbstoffen. Beispielsweise erzielt man bei einer praxisüblichen Polyester-Färbung bei Kochtemperatur sowie Carrierzusatz die unter Färberei-Fachleuten gebräuchlichen Richttyptiefen 1/1 RTT und 2/1 RTT durch Einsatz folgender Farbstoffmengen (bezogen auf den Reinfarbstoffgehalt des gefinishten Farbstoffs und bezogen auf die Fasermenge):

Farbstoff der Formel

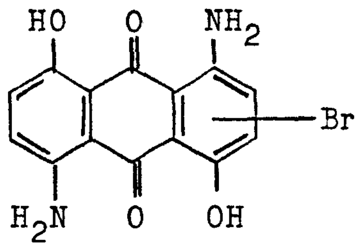

| | 1/1 RTT | 2/1 RTT |
|---|---|---|
| | 0,5 % | 1,1 % |

(C.I. Disperse Blue 56)

---

Mischung* aus 62 Gewichtsteilen Farbstoff der Formel

| | 1/1 RTT | 2/1 RTT |
|---|---|---|
| | 0,19 % | 0,4 % |

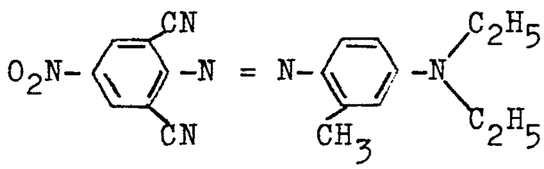

und 38 Gewichtsteilen Farbstoff der Formel

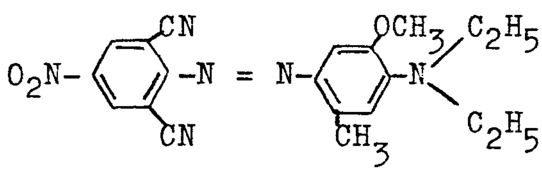

(* als Mischkristall vorliegend)

---

Mischung aus 55 Gewichtsteilen Farbstoff der Formel

| | 1/1 RTT | 2/1 RTT |
|---|---|---|
| | 0,18 % | 0,37 % |

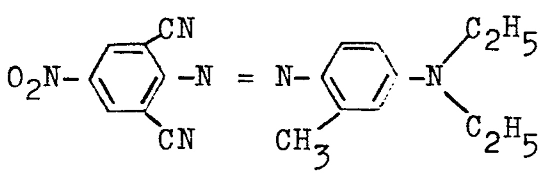

und 35 Gewichtsteilen Farbstoff der Formel RTT siehe Seite 45

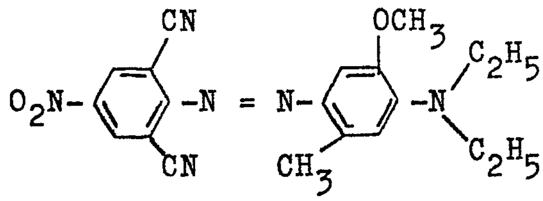

und 10 Gewichtsteilen Farbstoff der Formel

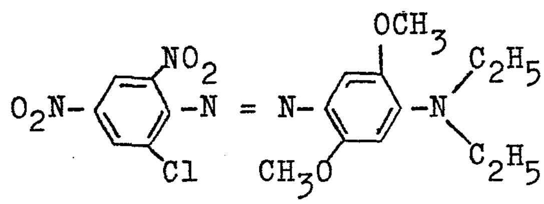

Die Färbebaderschöpfung oder - anders ausgedrückt - der Restfarbstoffgehalt im Färbebad bei Gleichgewichtseinstellung ist im Falle des Einsatzes der erfindungsgemäßen Farbstoffmischungen bzw. Mischkristalle wesentlich besser als z.B. bei Verwendung von Disperse Blue 56. Beim Kochtemperatur-Färben unter praxisüblichem Carrierzusatz erhält man auf Polyesterfasern in 2/1 RTT die folgende Baderschöpfung:

| Farbstoff der Formel | Baderschöpfung |
|---|---|
| 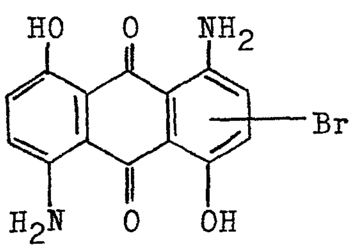 (C.I. Disperse Blue 56) | 91 % |

Mischung* aus 62 Gewichtsteilen Farbstoff der Formel

**Baderschöpfung**

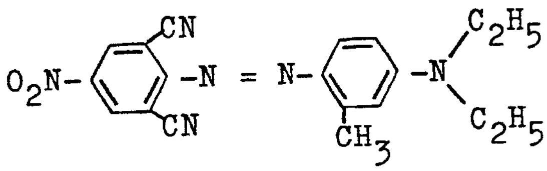

und 38 Gewichtsteilen Farbstoff der Formel

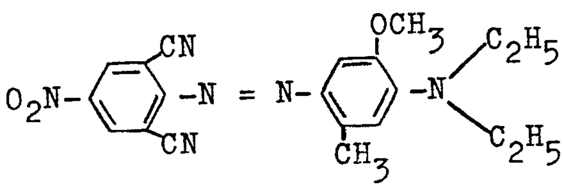

: 97 %

(* als Mischkristall vorliegend)

---

Mischung aus 55 Gewichtsteilen Farbstoff der Formel

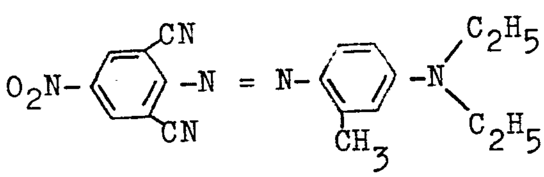

und 35 Gewichtsteilen Farbstoff der Formel

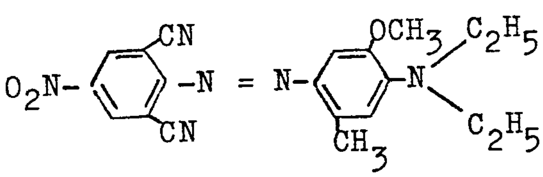

und 10 Gewichtsteilen Farbstoff der Formel

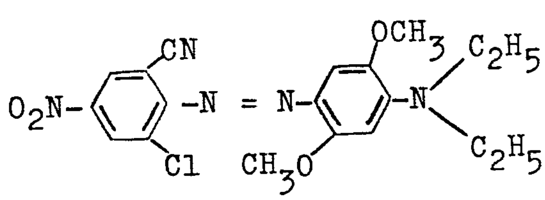

: 98 %

Ein ganz besonders überraschendes Wesensmerkmal der erfindungsgemäßen Farbstoffmischungen bzw. Mischkristalle ist deren verbesserte Färbebadausnutzung im Vergleich zu den betreffenden Einzelfarbstoffen. Wie die nachfolgende Übersicht zeigt, erhält man beim Kochtemperatur-Färben von Polyesterfasern (90 Minuten bei 98° bis 100°C) in Verbindung mit praxisüblichem Carrierzusatz bei den unten angegebenen Einsatzmengen (Badkonzentration) der Einzelfarbstoffe bzw. der Mischungen in Gewichtsprozent (gerechnet als Reinfarbstoff), bezogen auf das Polyestergewicht, die anschließend ausgewiesene folgende Färbebaderschöpfung:

| Farbstoff der Formel | Einsatzmenge | Baderschöpfung |
|---|---|---|
| 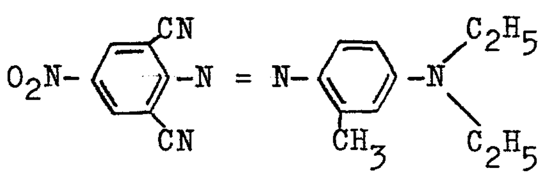 | 0,2 % | 83,3 % |
| | 0,4 % | 74,9 % |
| | 0,6 % | 49,5 % |
| Farbstoff der Formel | | |
| 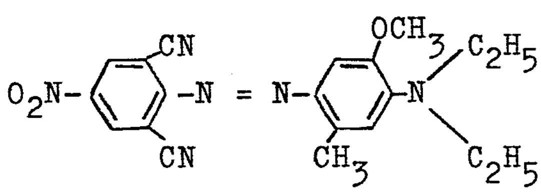 | 0,2 % | 72,0 % |
| | 0,4 % | 58,5 % |
| | 0,6 % | 34,1 % |
| Farbstoff der Formel | | |
| 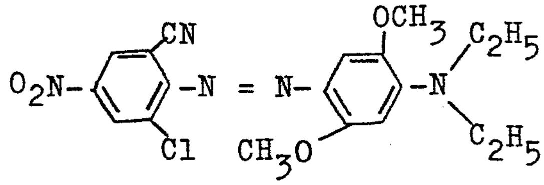 | 0,2 % | 69,7 % |
| | 0,4 % | 54,2 % |
| | 0,6 % | 32,5 % |

Mischung* aus 62 Gewichtsteilen Farbstoff der Formel

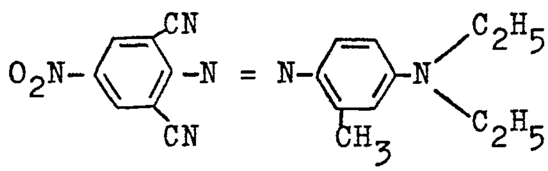

| Einsatzmenge | Baderschöpfung |
|---|---|
| 0,2 % | 98,6 % |
| 0,4 % | 95,8 % |
| 0,6 % | 78,7 % |

und 38 Gewichtsteilen Farbstoff der Formel

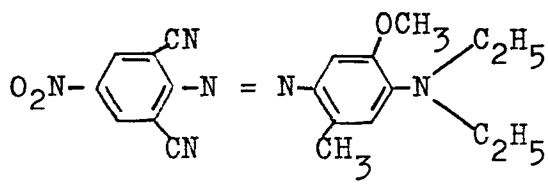

(* als Mischkristall vorliegend)

---

Mischung aus 55 Gewichtsteilen Farbstoff der Formel

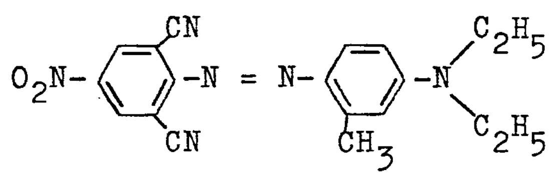

| Einsatzmenge | Baderschöpfung |
|---|---|
| 0,2 % | 99,0 % |
| 0,4 % | 97,5 % |
| 0,6 % | 85,8 % |

und 35 Gewichtsteilen Farbstoff der Formel

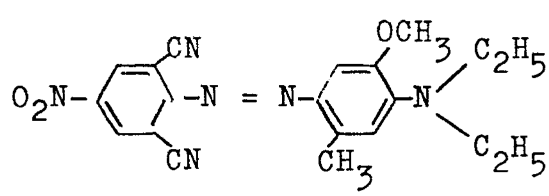

und 10 Gewichtsteilen
Farbstoff der Formel

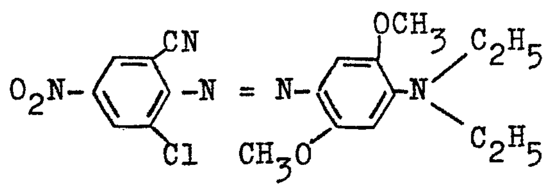

Des weiteren ergibt sich bei der Anwendung der erfindungsgemäßen Farbstoffmischungen bzw. Mischkristalle beim Kochtemperatur-Färben von Fasergemischen unter Verwendung praxisüblicher Carrier eine gegenüber Disperse Blue 56 wesentlich geringere Anschmutzung von Wolle-, Baumwolle- oder Regeneratcellulose-Begleitfaserkomponenten. Zudem ist die geringfügige Anschmutzung durch eine praxisübliche reduktive Nachbehandlung (z.B. Natriumdithionit/Natronlauge, Natriumdithionit/Ammoniak) bei den Färbungen mit den erfindungsgemäßen Farbstoffmischungen bzw. Mischkristallen wieder restlos entfernbar.

Die erfindungsgemäßen Farbstoffmischungen bzw. Mischkristalle sind nicht empfindlich gegenüber Ca-, Mg-, Cu- oder Fe-Ionen im Sinne von eventuellen Farbstoffausfällungen.

Unter Einsatz der erfindungsgemäßen Farbstoffmischungen bzw. Mischkristalle erhält man auch bei ungünstigen maschinellen oder substratmäßigen Färbebedingungen bereits nach kurzer Färbezeit Färbungen, die wesentlich egaler sind als Färbungen mit z.B. Disperse Blue 56. Dies ist besonders wichtig bei der Anwendung in der Wickelkörper-Färberei.

Die erfindungsgemäßen Farbstoffmischungen bzw. Mischkristalle werden in Bezug auf die anteiligen Einzelkomponenten zweckmäßigerweise so zusammengestellt, daß man einen Farbstoff, der z.B. unter Glühlampenlicht einen roten

Farbtonumschlag zeigt, mit einem Farbstoff, der z.B. unter Glühlampenlicht einen grünen Farbtonumschlag zeigt, kombiniert. Auf diese Weise kann aus verschiedenen Mischungspartnern eine gezielte Einstellung der Abendfarbe durchgeführt werden.

Beispielsweise läßt sich durch Mischungen auf der erwähnten Grundlage die Abendfarbe von Disperse Blue 56 sehr nahekommend, aber eher etwas vorteilhafter einstellen.

Färbt man zur experimentellen Untersuchung dieses Sachverhalts die nachfolgend aufgeführten Farbstoffe einzeln sowie als Mischung bei Kochtemperatur unter Verwendung eines prasixüblichen Carriers auf Polyesterfasern aus, so läßt sich das Kunstlichtverhalten meßtechnisch verfolgen und gegen den in der Praxis der Kochtemperatur-Färberei von Polyesterfasern besteingeführten Farbstoff Disperse Blue 56 vergleichen. Die farbmetrische Auswertung erfolgt gemäß DIN 6174 (Farbmetrische Bestimmung von Farbabständen bei Körperfarben nach der CIELAB-Formel) (vgl. Tabelle V):

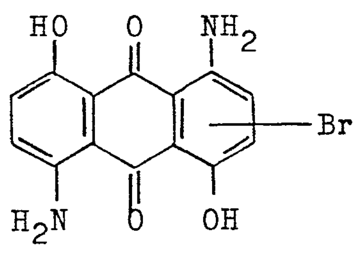

(a) 33 %ig gefinisht

(C.I. Disperse Blue 56)

Farbstoff der Formel

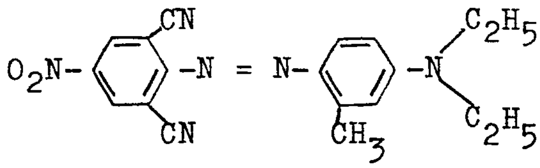

(b) 40 %ig gefinisht

Farbstoff der Formel

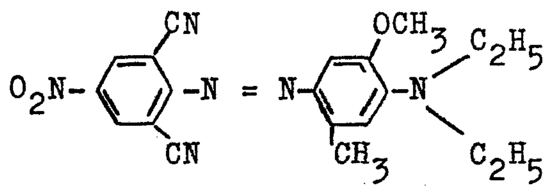

(c) 40 %ig gefinisht

Tabelle V  Abweichung bei der Lichtart A (10° -Beobachter) = Glühlampenlicht gegenüber der Lichtart D 65 (10° -Beobachter) = künstliches Tageslicht

| (a) | (b) | L* | A* | B* | E* | (c) | L* | A* | B* | E* | (b) +(c) | L* | A* | B* | E* |
|---|---|---|---|---|---|---|---|---|---|---|---|---|---|---|---|
| 0,05 % | 0,01 % | | | | 1,04 | 0,01 % | | | | 1,05 | 0,006 % +0,004 % | | | | 0,5 |
| 0,1 % | 0,02 % | | | | 1,25 | 0,02 % | | | | 1,39 | 0,012 % +0,008 % | | | | 0, |
| 0,2 % | 0,05 % | -0,16 | 1,14 | -0,68 | 1,34 | 0,05 % | 0,09 | -0,65 | 1,19 | 1,36 | 0,03 % + 0,02 % | -0,24 | 0,24 | -0,29 | 0, |
| 0,5 % | 0,1 % | | | | 1,20 | 0,1 % | | | | 2,21 | 0,06 % + 0,04 % | | | | 0, |
| 1 % | 0,2 % | | | | 1,82 | 0,2 % | | | | 2,35 | 0,12 % + 0,08 % | | | | 0, |
| 2 % | 0,5 % | | | | 2,76 | 0,5 % | | | | 2,47 | 0,3 % + 0,2 % | | | | 0, |
| 5 % | 1 % | | | | 4,05 | 1 % | | | | 3,61 | 0,6 % + 0,4 % | | | | 0, |
| 10 % | 2 % | | | | 5,98 | 2 % | | | | 4,52 | 1,2 % + 0,8 % | | | | 1, |

Fortsetzung Tabelle V

Abweichung bei der Lichtart F (10°-Beobachter) = Leuchtstoffröhrenlicht gegenüber der Lichtart D 65 (10°-Beobachter) = künstliches Tageslicht

| (a) | (b) | E* | (c) | E* | (b) +(c) | E* |
|---|---|---|---|---|---|---|
| 0,05 % | 0,01 % | 1,85 | 0,01 % | 1,52 | 0,006 % +0,004 % | 0,62 |
| 0,1 % | 0,02 % | 2,05 | 0,02 % | 1,93 | 0,012 % +0,008 % | 0,84 |
| 0,2 % | 0,05 % | 2,91 | 0,05 % | 1,68 | 0,03 % + 0,02 % | 1,01 |
| 0,5 % | 0,1 % | 2,34 | 0,1 % | 2,06 | 0,06 % + 0,04 % | 0,93 |
| 1 % | 0,2 % | 2,19 | 0,2 % | 1,82 | 0,12 % + 0,08 % | 0,88 |
| 2 % | 0,5 % | 2,05 | 0,5 % | 1,86 | 0,3 % + 0,2 % | 0,98 |
| 5 % | 1 % | 1,93 | 1 % | 1,96 | 0,6 % + 0,4 % | 0,99 |
| 10 % | 2 % | 2,39 | 2 % | 2,64 | 1,2 % + 0,8 % | 0,92 |

Hierbei bedeuten

+Δ L* = heller als Disperse Blue 56

-Δ L* = dunkler

+Δ A* = röter

-Δ A* = grüner

+Δ B* = gelber

-Δ B* = blauer

Es zeigt sich also, daß die geprüfte Farbstoffmischung nur einen kleinen Metamerie-Index ΔE* gegenüber Disperse Blue 56 aufweist. In der Praxis wird ein ΔE*-Wert, welcher kleiner als 1 ist, als brauchbare Metamerie-freie Nachstellung toleriert.

In den aufgeführten Beispielen sind unter Teilen und Prozenten, falls nichts anderes vermerkt ist, Gewichtsteile und Gewichtsprozente zu verstehen.

BEISPIEL 1

In einen 10 l-Rührkolben, in dem 6 l Dimethylformamid vorgelegt waren, wurden 432 g Kupfer-(I)-cyanid und 48 g Natriumcyanid eingetragen. Nach vorherigem Durchrühren während 15 Minuten bei 25-30°C wurde dieser Ansatz zunächst mit 470 g eines Farbstoffes, den man durch Diazotieren von 2,6-Dibrom-4-nitroanilin in konzentrierter Schwefelsäure und Kupplung mit 3-(N,N-Diethylamino)-toluol erhalten hatte, und dann noch einmal mit 500 g eines Farbstoffes, den man durch Diazotieren von 2,6-Dibrom-4-nitroanilin in konzentrierter Schwefelsäure und Kupplung mit 3-(N,N-Diethylamino)-4-methoxy-toluol hergestellt hatte, versetzt. Daraufhin rührte man die miteinander vereinigten Azofarbstoffe 6 Stunden lang bei 110°C, ließ das Gemisch abkühlen und schließlich unter weiterem Rühren über Nacht bei Raumtemperatur stehen. Nun wurden in das Behandlungsmedium bei 15°-20°C innerhalb von einer Stunde 2 l Eiswasser zulaufen gelassen. Man rührte den Kolbeninhalt noch eine weitere Stunde nach, filtrierte das angefallene Verfahrenserzeugnis hernach ab und wusch dasselbe mit Wasser. Zur Entfernung von Kupfer-Salzen wurde das resultierende Umwandlungsprodukt mit einer flüssigen Phase aus 5%igem Ammoniak und einem Netzmittel für die Dauer von 4 Stunden bei Luftzutritt durchgerührt, sodann erneut abfiltriert und gewaschen und abschließend bei 40°C im Vakuum getrocknet. Man erhielt 665 g einer Farbstoffpräparation in Form eines Mischkristalls, welchem als Einzelbestandteile die Dispersionsfarbstoffe der folgenden Formeln zugrundelagen:

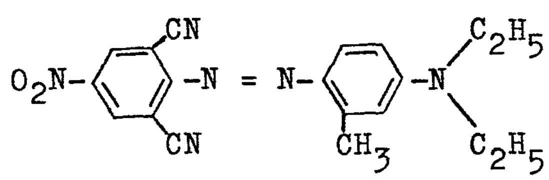

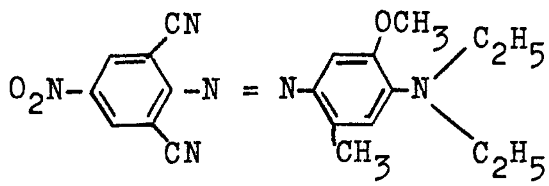

Dieser Mischkristall war im Röntgenbeugungs-Spektrum durch die relativen Reflexintensitäten
21,3 /11,0 /100,0 /10,2 /17,5 /31,2
bei den Glanzwinkeln Θ (CuKα-Strahlung)
6,25°/9,74°/11,46°/21,81° /24,38°/26,19° charakterisiert.

Die Bildung von Mischkristallen konnte auch mit bloßem Auge am Auslauf der mit Wasser verdünnten Farbstoffpräparationen erkannt werden.

Aus 40 Teilen des auf obige Weise erzeugten Farbstoff-Mischkristalles und 60 Teilen eines herkömmlichen Dispergiermittels aus der Reihe der Ligninsulfonate stellte man durch wäßriges Vermahlen in einer Perlmühle eine feinverteilte Farbstoffdispersion her und trocknete diese danach durch Sprühtrocknung.

Für das anschließende Färben unter Kochtemperaturbedingungen wurden als Textilmaterial 100 Teile einer PES-Faser (Polyethylenterephthalat-Typ) in Garn-Form verwendet und damit ein Färbebecher beschickt, welcher 2000 Teile Wasser von 60°C, 2 Teile kristallisiertes Natriumacetat, 3 Teile 30%ige Essigsäure, 5 Teile eines handelsüblichen Carriers auf Basis von Diphenyl und 1 Teil der zuvor beschriebenen Farbstoffdispersion enthielt. Diese Ausziehflotte samt dem darin befindlichen Färbegut erwärmte man nunmehr innerhalb von 30 Minuten auf 100°C und beließ dieselben für eine Behandlungsdauer von 60 Minuten bei der eingestellten Temperatur. Daraufhin wurde das Färbebad abgekühlt; das so gefärbte Garn wurde zunächst mit Wasser

gespült, dann getrocknet und schließlich für 30 Sekunden bei 150°C trocken nacherhitzt.

Als färberisches Ergebnis erhielt man eine klare, tiefblaue Färbung mit hoher Lichtechtheit, währenddessen lediglich ein kaum merklicher Restfarbstoffgehalt im ausgezogenen Färbebad zurückblieb.

BEISPIEL 1a

100 Teile Textilgut einer PA-Faser (Nylon 6-Typ) wurden in einen Färbebecher gegeben, welcher 3000 Teile Wasser von 40°C, 2 Teile kristallisiertes Natriumacetat, 3 Teile 30%ige Essigsäure und 0,5 Teile der Farbstoffpräparation entsprechend Beispiel 1 enthielt. Hierauf wurde die in dieser Weise zubereitete Ausziehflotte unter Bewegung des Fasermaterials innerhalb von 45 Minuten auf 98°-100°C erhitzt und 60 Minuten bei dieser Temperatur belassen. Anschließend wurde das Bad abgekühlt; das so behandelte Färbegut wurde zunächst mit Wasser gespült und dann getrocknet. Es wurde eine klare, blaue Färbung mit guten Naßechtheiten erhalten.

BEISPIEL 1b

Die zum Färben im Beispiel 1a als Textilgut verwendete PA-Faser wurde hier durch eine Mischung aus gleichen Teilen einer CA-Faser (Cellulose-2 1/2-acetat) und einer CT-Faser (Cellulosetriacetat) ersetzt. Die Färbung selbst wurde wie im Beispiel 1a beschrieben durchgeführt. Das Ergebnis war in diesem Fall eine klare, blaue Färbung mit einem leichten Melange-Effekt, wobei die CA-Faser etwas tiefer angefärbt war als die CT-Faser.

BEISPIEL 2

Man stellte sich wie sonst in Beispiel 1 beschrieben, jedoch hier unter Verwendung eines Gemisches (der Einzelfarbstoffe ohne Mischkristallbildung) aus 60 Teilen des Dispersionsfarbstoffes der Formel

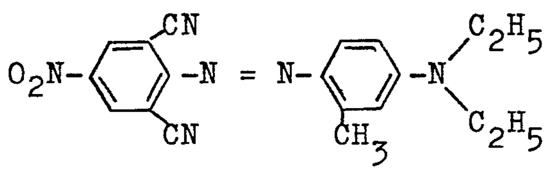

und 40 Teilen des Dispersionsfarbstoffs der Formel

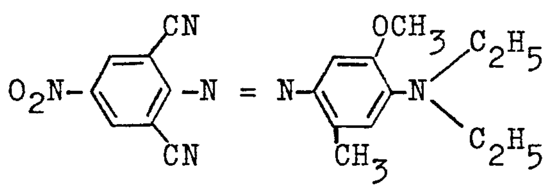

sowie 150 Teilen eines praxisüblichen Dispergiermittels aus der Reihe der sulfonierten Naphthalin-Formaldehyd-Kondensationsprodukte durch wäßriges Vermahlen in einer Perlmühle eine feinverteilte Farbstoffdispersion her und trocknete diese anschließend durch Sprühtrocknung.

In der zuvor erläuterten Mischung war der erstgenannte Farbstoff im Röntgenbeugungs-Spektrum durch die relativen Reflexintensitäten
100,0/40,7/24,3 /33,9 /28,0 /80,9 /21,1 /20,7 /21,5
bei den Glanzwinkeln ϴ (CuKα-Strahlung)
7,0°/8,16°/10,00°/11,41°/16,30°/18,87°/25,94°/28,23°/30,45°
charakterisiert.
Der zweitgenannte Farbstoff war im Röntgenbeugungs-Spektrum durch die relativen Reflexintensitäten
100,0/60,5 /43,6 /46,4 /44,4 /23,1 /21,9
bei den Glanzwinkeln ϴ (CuKα-Strahlung)
9,39°/10,49°/12,61°/13,01°/23,39°/24,40°/27,68°
charakterisiert.

Führte man unter Einsatz dieser so zubereiteten Farbstoffdispersion nun entsprechend der Färbetechnik von Beispiel 1 bei Kochtemperatur eine Färbung auf PES-Fasern durch, so erhielt man eine zum dortigen Färberesultat gleichwertige Färbung und Erschöpfung des Färbebades.

BEISPIEL 3

Mit den nach Angaben in den Beispielen 1 und 2 hergestellten Farbstoffdispersionen wurde zur Demonstration einer Ausziehfärbung unter Hochtemperaturbedingungen ohne Mitverwendung eines Carriers jeweils folgender Versuch durchgeführt:

100 Teile einer PES-Faser (Polyethylenterephthalat-Typ) wurden als Stückware in eine Färbebombe gegeben, welche 1000 Teile Wasser von 60°C, 2 Teile kristallisiertes Natriumacetat, 3 Teile 30%ige Essigsäure und 2 Teile einer der zuvor genannten Farbstoffdispersionen von unterschiedlicher Herkunft enthielt. Man erhitzte diese Flotte nunmehr innerhalb von 30 Minuten auf 130°C und beließ den Färbeansatz sodann 15 Minuten bei der eingestellten Temperatur. Nach dem Abkühlen des Bades, Spülen des so behandelten Textilguts mit Wasser, reduktiven wäßrigen Nachreinigen desselben mit Natriumdithionit/Natronlauge bei 80°C erhielt man eine tiefblaue Färbung, ohne daß merkliche Farbstoffmengen im Färbebad zurückblieben.

BEISPIEL 4

Verwendete man als zu färbendes Textilgut anstelle der im Beispiel 1 genannten 100 Teile PES-Faser hier eine innige Mischung aus 50 Teilen PES-Faser und 50 Teilen Baumwolle oder Regeneratcellulose-Fasern in Garn-Form und verfuhr man zum Ausziehfärben unter Kochtemperaturbedingungen im

übrigen entsprechend der dortigen Vorschrift, so erhielt man in diesem Fall auf dem PES-Faser-Anteil der Ware eine tiefblaue Färbung bei nur geringer Anfärbung der Baumwoll- bzw. Regeneratcellulosefaser-Komponente.

Durch eine Nachbehandlung des so gefärbten Mischfasermaterials während 15 Minuten bei 80°C mit einer wäßrigen Flotte, welche eine übliche Menge Natriumdithionit und Natronlauge enthielt, wurde der Baumwoll- bzw. Regeneratcellulose-Faseranteil völlig entfärbt.

BEISPIEL 5

Wenn man zum Ausziehfärben bei Kochtemperatur als Textilgut in Garn-Form anstelle der im Beispiel 1 genannten 100 Teile PES-Faser hier eine innige Mischung aus 55 Teilen PES-Faser und 45 Teilen Wolle einsetzte und hinsichtlich der Färbebedingungen ansonsten wie im Beispiel 1 verfuhr, dann wurde auf dem PES-Anteil der Ware eine tiefblaue Färbung bei nur geringer Anfärbung der Wollfaser-Komponente erzielt.

Durch eine Nachbehandlung der gefärbten PES-Faser/Wolle-Mischung während 15 Minuten bei 70°-80°C mit einer wäßrigen Flotte, welche eine übliche Menge Natriumdithionit und Ammoniak enthielt, wurde der Wolle-Anteil völlig entfärbt.

BEISPIEL 6

Ersetzte man im Zuge der Färbeoperation nach Beispiel 1 als Textilgut die dort genannten 100 Teile PES-Faser vom Polyethylenterephthalat-Typ durch eine handelsübliche PES-Faser eines beliebigen anderen Typs, z.B. auf Polycyclohexylenterephthalat-Basis, so erhielt man ein gleich gutes Färberesultat.

BEISPIEL 7

Führte man gemäß den Angaben des Beispiels 1 die Färbung mit einem PES-Faser-Wickelkörper (Muff mit einer Wickeldichte von 300 g/l) in der Weise durch, daß hierbei mit einseitiger Flottenzirkulation von innen nach außen und mit einem Färbeflottendurchsatz von 10 $l \cdot kg^{-1} \cdot min^{-1}$, mit einer Aufheizgeschwindigkeit zwischen 60 und 130°C von 2 $grad \cdot min^{-1}$ und mit einer Färbedauer bei 130°C von 15 Minuten gearbeitet wurde, dann erhielt man eine völlig egale Färbung.

BEISPIEL 8

Man verwendete für das Färben von 100 Teile einer PES-Faser aufweisendem Textilmaterial in Stück-Form auf einer Jet-Färbemaschine eine Flotte der Zusammensetzung 1000 Teile Wasser von 60°C, 2 Teile kristallisiertes Natriumacetat, 3 Teile 30%ige Essigsäure, 4 Teile eines handelsüblichen Carriers auf Basis o-Phenyl-phenol, 0,5 Teile eines handelsüblichen Gelb-Farbstoffs des Typs Disperse Yellow 54 (C.I.-Nr. 47020), 0,2 Teile eines handelsüblichen Rot-Farbstoffs des Typs Disperse Red 65 (C.I.-Nr. 11228) sowie 0,1 Teile einer Farbstoffdispersion, die durch wäßrige Perlmahlung von 30 Teilen eines Nonylphenoloxethylats (mit 25 Mol an umgesetztem Ethylenoxid), 40 Teilen eines herkömmlichen Dispergiermittels auf Basis von Ligninsulfonat und einer Mischung aus 15 Teilen des Dispersionsfarbstoffs der Formel

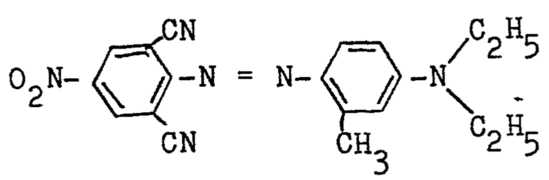

9 Teilen des Dispersionsfarbstoffes der Formel

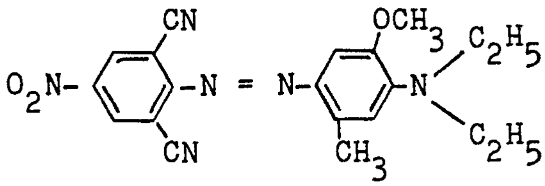

und 6 Teilen des Dispersionsfarbstoffes der Formel

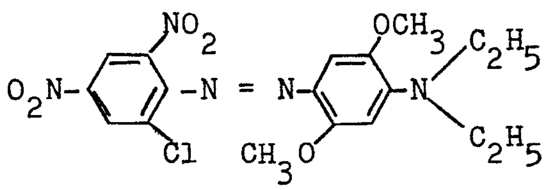

sowie anschließende Sprühtrocknung der hierbei bewirkten Dispersion hergestellt wurde.

Zur Durchführung der Färbeoperation erwärmte man obige Ausziehflotte innerhalb von 30 Minuten auf 98°-100°C und färbte das Textilgut 90 Minuten bei dieser Temperatur. Anschließend wurde der Färbejet auf 70°C abgekühlt und die so gefärbte Ware während weiterer Umläufe mit Wasser gespült. Nach erfolgter Fertigstellung erhielt man eine Braun-Färbung mit sehr guten Echtheitseigenschaften sowie mit einwandfreier Egalität.

BEISPIELE 9 bis 24

Man stellte sich analog Beispiel 2 aus den in der folgenden Tabelle (a) angegebenen Farbstoffen mit den Formeln I und II

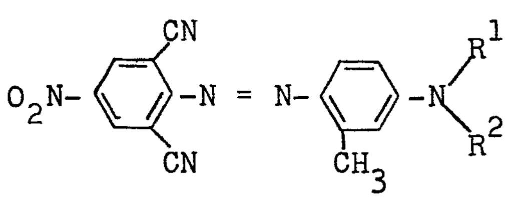

(I)

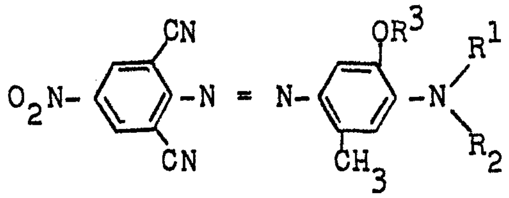

(II)

in den nachstehend aufgeführten Mengen jeweils feinverteilte Farbstoffdispersionen (Mischungen ohne Mischkristallbildung) her und erhielt unter Einsatz dieser Präparationen beim anschließenden Färben unter den dort genannten Bedingungen gleich gute Färberesultate:

Tabelle (a)

| Beispiel | Teile I | Teile II | Farbstoff Formel I $R^1$ | Farbstoff Formel I $R^2$ | Farbstoff Formel II $R^1$ | Farbstoff Formel II $R^2$ | Farbstoff Formel II $R^3$ |
|---|---|---|---|---|---|---|---|
| 9 | 50 | 50 | $-CH_3$ | $-CH_3$ | $-CH_3$ | $-CH_3$ | $-CH_3$ |
| 10 | 20 | 80 | $-CH_3$ | $-CH_3$ | $-CH_3$ | $-CH_3$ | $-CH_3$ |
| 11 | 90 | 10 | $-CH_3$ | $-CH_3$ | $-CH_3$ | $-CH_3$ | $-CH_3$ |
| 12 | 50 | 50 | $-C_2H_5$ | $-C_2H_5$ | $-CH_3$ | $-CH_3$ | $-CH_3$ |
| 13 | 50 | 50 | $-CH_3$ | $-C_2H_5$ | $-CH_3$ | $-CH_3$ | $-CH_3$ |
| 14 | 50 | 50 | $-CH_3$ | 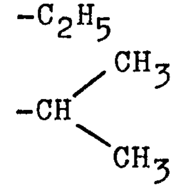 | $-CH_3$ | $-CH_3$ | $-CH_3$ |
| 15 | 50 | 50 | $-CH_3$ | $-CH_2-CH=CH_2$ | $-CH_3$ | $-CH_3$ | $-CH_3$ |
| 16 | 70 | 30 | $-CH_2-CH=CH_2$ | $-CH_2-CH=CH_2$ | $-CH_3$ | $-CH_3$ | $-CH_3$ |
| 17 | 70 | 30 | $-CH_3$ | $-CH_3$ | $-C_2H_5$ | $-C_2H_5$ | $-CH_3$ |
| 18 | 70 | 30 | $-C_2H_5$ | $-C_2H_5$ | $-CH_3$ | $-C_2H_5$ | $-CH_3$ |
| 19 | 70 | 30 | $-C_2H_5$ | $-C_2H_5$ | $-CH_3$ | $-CH_2-CH=CH_2$ | $-CH_3$ |
| 20 | 70 | 30 | $-C_2H_5$ | $-C_2H_5$ | $-C_2H_5$ | $-(CH_2)_3-CH_3$ | $-CH_3$ |
| 21 | 70 | 30 | $-C_2H_5$ | $-C_2H_5$ | $-CH_2-CH=CH_2$ | $-CH_2-CH=CH_2$ | $-CH_3$ |
| 22 | 70 | 30 | $-C_2H_5$ | $-C_2H_5$ | $-CH_3$ | $-CH_3$ | $-C_2H_5$ |
| 23 | 70 | 30 | $-CH_2-CH=CH_2$ | $-CH_2-CH=CH_2$ | $-CH_2-CH=CH_2$ | $-CH_2-CH=CH_2$ | $-CH_3$ |
| 24 | 60 | 40 | $-CH_2-CH=CH_2$ | $-CH_2-CH=CH_2$ | $-CH_2-CH=CH_2$ | $-CH_2-CH=CH_2$ | $-CH_2-CH_2-O-CH_3$ |

BEISPIELE 25 bis 27

Ersetzte man in der Präparation nach Beispiel 2 insgesamt 20 Teile der dort eingesetzten Einzelfarbstoffe der Formeln I und/oder II durch 20 Teile der in der folgenden Tabelle (b) erwähnten Farbstoffe mit den Formeln III oder IV, und verfuhr man zum Färben entsprechend der aus Beispiel 2 ersichtlichen Vorschrift, dann wurden gleich gute Färbeergebnisse erzielt:

Tabelle (b)

| Beispiel | Farbstoff Formel III oder Formel IV |
|---|---|
| 25 | 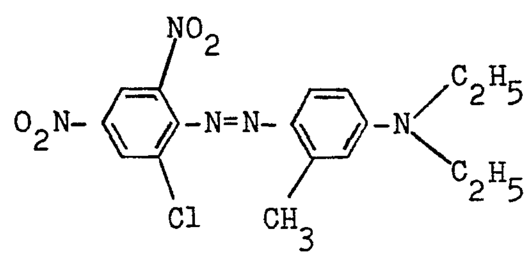 |
| 26 | 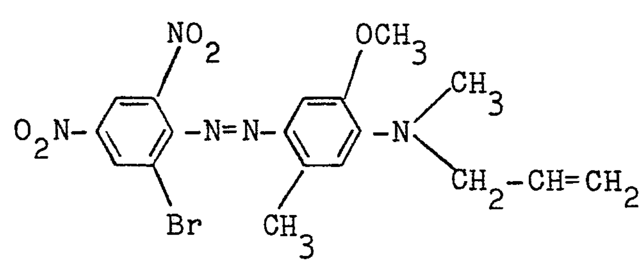 |
| 27 | 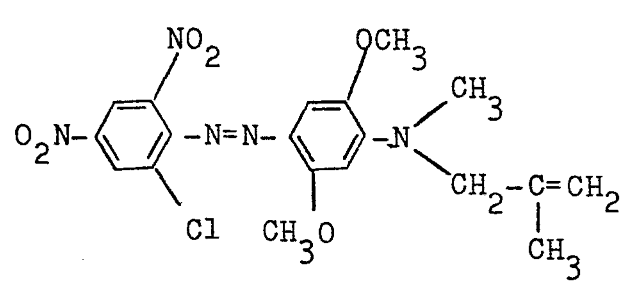 |

PATENTANSPRÜCHE:



1. Farbstoffpräparation in Form einer Mischung oder Mischkristalles, gekennzeichnet durch (a) einen Gehalt an 20 bis 90 Gewichtsteilen mindestens eines blauen Dispersionsfarbstoffes der allgemeinen Formel I

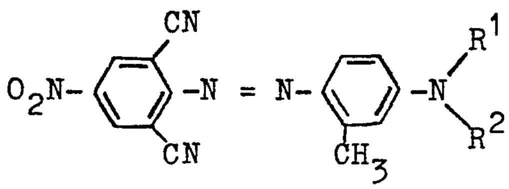

(I),

und 10 bis 80 Gewichtsteilen mindestens eines blauen Dispersionsfarbstoffs der allgemeinen Formel II

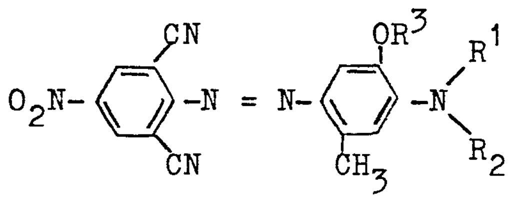

(II),

und 0 bis 70 Gewichtsteilen mindestens eines blauen Dispersionsfarbstoffs der allgemeinen Formel III

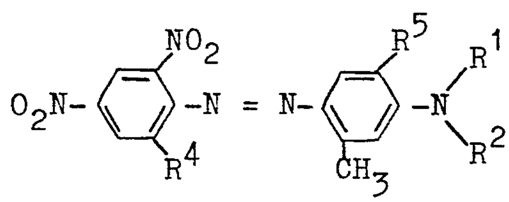

(III),

und 0 bis 30 Gewichtsteilen mindestens eines blauen Dispersionsfarbstoffs der allgemeinen Formel IV

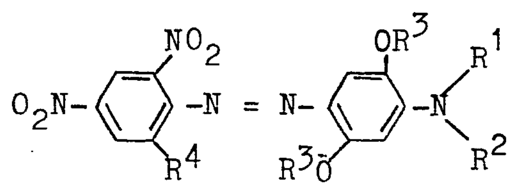

(IV),

0147783

oder (b) einen Gehalt an
20 bis 90 Gewichtsteilen mindestens eines blauen Dispersionsfarbstoffes der Formel I,
oder 10 bis 80 Gewichtsteilen mindestens eines blauen Dispersionsfarbstoffes der Formel II,
und 10 bis 90 Gewichtsteilen mindestens eines blauen Dispersionsfarbstoffes der Formel III,
und 0 bis 30 Gewichtsteilen mindestens eines blauen Dispersionsfarbstoffes der Formel IV,

wobei in den Formeln I bis IV

$R^1$ und $R^2$ = geradkettiges oder verzweigtes $(C_1-C_4)$-Alkyl oder $(C_1-C_4)$-Alkenyl, die jeweils gleich oder verschieden sein können,
$R^3$ = Methyl oder Ethyl, gegebenenfalls in der Kohlenstoffkette durch Ethersauerstoff unterbrochen,
$R^4$ = Chlor oder Brom und
$R^5$ = Wasserstoff oder den Rest $OR^3$

bedeuten und worin die anteiligen Mengen an den zugrundeliegenden Einzelfarbstoffen jeweils auf ein Gesamtgewicht der Präparation von 100 Gewichtsteilen an den Farbstoffen der Formeln I bis IV berechnet und auf den Gehalt an Reinfarbstoff bezogen sind.

2. Farbstoffpräparation nach Anspruch 1, gekennzeichnet durch (a) einen Gehalt an
30 bis 80 Gewichtsteilen mindestens eines blauen Dispersionsfarbstoffes der Formel I,
und 20 bis 70 Gewichtsteilen mindestens eines blauen Dispersionsfarbstoffes der Formel II,
und 0 bis 50 Gewichtsteilen mindestens eines blauen Dispersionsfarbstoffes der Formel III,
und 0 bis 20 Gewichtsteilen mindestens eines blauen Dispersionsfarbstoffes der Formel IV,

oder (b) einen Gehalt an
30 bis 80 Gewichtsteilen mindestens eines blauen Dispersionsfarbstoffes der Formel I,
oder 20 bis 70 Gewichtsteilen mindestens eines blauen Dispersionsfarbstoffes der Formel II,
und 20 bis 80 Gewichtsteilen mindestens eines blauen Dispersionsfarbstoffes der Formel III,
und 0 bis 20 Gewichtsteilen mindestens eines blauen Dispersionsfarbstoffes der Formel IV.

3. Farbstoffpräparation nach Anspruch 1, gekennzeichnet durch einen Gehalt an
50 bis 70 Gewichtsteilen des blauen Dispersionsfarbstoffes der Formel I, worin $R^1$ und $R^2 = C_2H_5$ bedeuten, und
30 bis 50 Gewichtsteilen des blauen Dispersionsfarbstoffes der Formel II, worin $R^1$ und $R^2 = C_2H_5$, und $R^3 = CH_3$ bedeuten.

4. Farbstoffpräparation nach Anspruch 1, gekennzeichnet durch einen Gehalt an
50 bis 70 Gewichtsteilen des blauen Dispersionsfarbstoffes der Formel I, worin $R^1$ und $R^2 = C_2H_5$ bedeuten, und
30 bis 50 Gewichtsteilen des blauen Dispersionsfarbstoffes der Formel II, worin $R^1$ und $R^2 = C_2H_5$, und $R^3 = CH_3$ bedeuten, und
10 bis 20 Gewichtsteilen des blauen Dispersionsfarbstoffes der Formel IV, worin $R^1$ und $R^2 = C_2H_5$, $R^3 = CH_3$ und $R^4$ = Chlor oder Brom bedeuten.

5. Farbstoffpräparation nach einem der Ansprüche 1 bis 4, gekennzeichnet durch einen zusätzlichen Gehalt an mindestens einem weiteren Dispersionsfarbstoff von unterschiedlicher chemischer Struktur als die der Farbstoffe

gemäß den Formeln I bis IV, welcher von sich aus als Nuance ebenfalls Blau ergibt.

6. Farbstoffpräparation nach einem der Ansprüche 1 bis 4 und gegebenenfalls Anspruch 5, gekennzeichnet durch einen zusätzlichen Gehalt an mindestens einem weiteren Dispersionsfarbstoff von unterschiedlicher chemischer Struktur als die der Farbstoffe gemäß den Formeln I bis IV, welcher von sich aus eine andere Nuance als Blau ergibt.

7. Farbstoffpräparation nach einem der Ansprüche 1 bis 4, dadurch gekennzeichnet, daß die Mischung oder der Mischkristall aus den Dispersionsfarbstoffen der Formeln I bis IV, gegebenenfalls unter Teilnahme mindestens einer weiteren Farbstoff-Mischkomponente gemäß den Ansprüchen 5 oder 6, in Form einer durch Vermahlung mittels Dispergiermittel(n) resultierenden Feinverteilung im färbefertigen Zustand vorliegt.

8. Farbstoffpräparation nach Anspruch 7 aus den Dispersionsfarbstoffen der Formeln I bis IV, welche
--- durch Mischen fertig gefinishter Farbstoffpräparationen der zugrundeliegenden Einzelfarbstoffe, oder
--- durch gemeinsames Finishen der zugrundeliegenden Einzelfarbstoffe als Gemisch, gegebenenfalls unter Bedingungen, wobei die Bildung eines Mischkristalles aus den Einzelkomponenten eintreten kann, oder
--- durch Finishen eines durch gemeinsame Azo-Kupplung oder gemeinsamen Cyanaustausch angefallenen Mischkristalles aus den zugrundeliegenden Einzelfarbstoffen,

gegebenenfalls unter Teilnahme mindestens einer weiteren Farbstoff-Mischkomponente gemäß den Ansprüchen 5 oder 6 hergestellt worden ist.

9. Verwendung einer Farbstoffpräparation nach einem der Ansprüche 1 bis 4 als Dispersions-Blaufarbstoff zur Erzielung von Typ- oder Kombinationsfarbtönen auf Synthesefasern für sich allein oder solche synthetischen Fasern aufweisenden Mischungen.

10. Verwendung einer Farbstoffpräparation nach einem der Ansprüche 1 bis 4 in Kombination mit mindestens einer weiteren Farbstoff-Mischkomponente gemäß den Ansprüchen 5 oder 6 zur Erzielung einer anderen Nuance als Blau.

11. Verfahren zum Ausziehfärben von Textilmaterial aus Synthesefasern für sich allein oder als Bestandteil von solche synthetische Fasern aufweisenden Mischungen mit Naturfasern oder Regeneratfasern, dadurch gekennzeichnet, daß man als Dispersions-Blaufarbstoff für Typ- und Kombinationsfärbungen eine Farbstoffpräparation gemäß den Ansprüchen 1 bis 4 einsetzt.

12. Verfahren nach Anspruch 11, dadurch gekennzeichnet, daß das Synthesefasermaterial aus Polyester-, Polyamid- oder Acetatfasern zusammengesetzt ist.

13. Verfahren nach Anspruch 12, dadurch gekennzeichnet, daß es sich bei dem Polyesterfasermaterial um ein Mischpolymerisat von einem Estermonomeren mit einem Polyethylenglykol, Isophthaläure oder einer polymerisierbaren Phosphorverbindung handelt.

14. Verfahren nach Anspruch 11, dadurch gekennzeichnet, daß man die Färbeoperation nach der Ausziehfärbetechnik unter Hochtemperatur(HT)-Bedingungen durchführt.

15. Verfahren nach Anspruch 12, dadurch gekennzeichnet, daß man die Färbeoperation nach der Ausziehfärbetechnik unter atmosphärischen Bedingungen bei Kochtemperatur des wäßrigen Färbemediums, gegebenenfalls in Gegenwart eines Carriers durchführt.

16. Verfahren nach Anspruch 11, dadurch gekennzeichnet, daß man die Farbstoffpräparation gemäß den Ansprüchen 1 bis 4 zur Färbeoperation in Kombination mit mindestens einer weiteren Farbstoff-Mischkomponente gemäß den Ansprüchen 5 oder 6 einsetzt.

17. Textilmaterial aus Synthesefasern für sich allein oder als Bestandteil von solche synthetische Fasern aufweisenden Mischungen, welches mit einer Farbstoffpräparation gemäß den Ansprüchen 1 bis 8 gefärbt worden ist.

18. Textilmaterial aus Synthesefasern für sich allein oder als Bestandteil von solche synthetische Fasern aufweisende Mischungen, welches nach einem Verfahren gemäß den Ansprüchen 11 bis 16 gefärbt worden ist.